# EUROPEAN PATENT APPLICATION

(11) **EP 3 849 255 A1**
(43) Date of publication of application: **14.07.2021**
(21) Application number: 19866842.8
(22) Date of filing: 25.09.2019
(51) Int. Cl.: H04W 64/00, H04W 68/00

(54) **COMMUNICATION METHOD AND APPARATUS**

(30) Priority: 27.09.2018 CN 201811137202
(71) Applicant: HUAWEI TECHNOLOGIES CO., LTD., Shenzhen, Guangdong 518129 (CN)
(72) Inventor: CHEN, Lei, Shenzhen, Guangdong 518129 (CN); LI, Bingzhao, Shenzhen, Guangdong 518129 (CN); XU, Bin, Shenzhen, Guangdong 518129 (CN); WANG, Xuelong, Shenzhen, Guangdong 518129 (CN)
(74) Representative: Gill Jennings & Every LLP
(86) International application number: PCT/CN2019/107892
(87) International publication number: WO 2020/063679

(57) **Abstract**

This application provides a communications method and apparatus, and relates to the field of communications technologies, to resolve a problem that a terminal frequently performs TAU because a TAU mechanism of a conventional cellular network is directly used in a non-terrestrial network, thereby increasing energy consumption of the terminal. The method includes: receiving, by a terminal device, tracking area information from an access network device, and determining, based on a second tracking area identity, whether to perform the TAU. The tracking area information includes a first tracking area identity and a second tracking area identity, where the first tracking area identity is a tracking area identity of a first cell, and the second tracking area identity is used by the terminal device to perform the tracking area update TAU. The method is used in a location management process of the terminal.

## Description

This application claims priority to Chinese Patent Application No. 201811137202.5, filed with the China National Intellectual Property Administration on September 27, 2018 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

To resolve a problem that a conventional terrestrial network cannot provide seamless coverage for a terminal, a non-terrestrial network (Non terrestrial networks, NTN) is introduced into a communications system. The NTN provides seamless coverage for the terminal by deploying a base station or some functions of the base station on a high altitude platform or a satellite. The high altitude platform or the satellite is slightly affected by a natural disaster and covers a relatively large area (such as a desert and a sea). Therefore, reliability of the communications system can be improved. An example in which the satellite expands coverage for the terminal is used. The satellite covers different areas on the ground by using different beams. Herein, one or more beams of the satellite may be understood as one or more cells.

In a conventional cellular network, a paging mechanism based on a tracking area (Tracking Area, TA) is introduced to determine that the terminal is reachable at any time. When the terminal performs registration or a tracking area update (Tracking Area update, TAU), a core network device sends a tracking area list (Tracking Area list, TA list) to the terminal. Generally, one TA list includes one or more TAs, and each TA includes a plurality of cells. Subsequently, if the terminal moves in a cell included in the TA list, the terminal does not need to perform the TAU. In addition, after a service arrives at the terminal, the core network device pages the terminal in the TA list area. On the contrary, if the terminal moves out of a cell included in the TA list, the terminal needs to perform the TAU, so that the core network device learns of a TA in which the terminal is currently located.

If the TAU mechanism of the conventional cellular network is directly used in the non-terrestrial network, for example, used in a non-geostationary earth orbit (Non-Geostationary Earth Orbit, NGEO) network, because the satellite moves at a high speed, even if the terminal does not move or moves at a low speed, a serving cell of the terminal may also change. Consequently, the serving cell of the terminal is not a cell in the TA list, and the terminal is triggered to frequently perform the TAU, thereby increasing power consumption of the terminal. It can be learned that the TAU mechanism of the conventional cellular network is not applicable to the non-terrestrial network such as an NGEO.

### SUMMARY

Embodiments of this application provide a communications method and apparatus, to prevent a terminal from frequently performing a TAU in a non-terrestrial network, and reduce energy consumption of the terminal.

To achieve the foregoing objectives, the following technical solutions are used in the embodiments of this application.

According to a first aspect, an embodiment of this application provides a communication method, where the method is used in a terminal or a chip in a terminal, and the method includes: A terminal device receives tracking area information from an access network device, and determines, based on a second tracking area identity, whether to perform a TAU. The tracking area information includes a first tracking area identity and a second tracking area identity, where the first tracking area identity is a tracking area identity of a first cell, and the second tracking area identity is used by the terminal device to perform the tracking area update TAU.

According to the communication method provided in this embodiment of this application, the terminal obtains the tracking area information from the access network device, and determines, based on the second tracking area identity, whether to perform the TAU. The tracking area information includes the first tracking area identity and the second tracking area identity, where the first tracking area is the tracking area identity of the first cell in which the terminal device is located, and the second tracking area identity is used by the terminal to determine whether to perform the TAU. Compared with the prior art in which because a high altitude station moves at a high speed, the terminal may be triggered to frequently perform the TAU, in the communication method in this embodiment of this application, even if the high altitude station moves at a high speed, and a serving cell of the terminal changes, because a new serving cell of the terminal may be in a second tracking area corresponding to the second tracking area identity, the TAU may not be triggered. This reduces a frequency of performing TAU and power consumption of the terminal.

In a possible design, the tracking area information further includes a time parameter.

That the terminal device determines, based on a second tracking area identity, whether to perform a TAU may be implemented as: The terminal device determines, based on the time parameter and the second tracking area identity, whether to perform the TAU.

In a possible design, the time parameter is used to configure a timer, and timing duration of the timer is T.

Correspondingly, that the terminal device determines, based on the time parameter and the second tracking area identity, whether to perform the TAU may be specifically implemented as: When the timer expires, the terminal device determines, based on the second tracking area identity, whether to perform the TAU.

In a possible design, that the terminal device determines, based on a second tracking area identity, whether to perform a TAU may be specifically implemented as: When the timer expires, the terminal device determines whether a tracking area in which the terminal device is currently located is a second tracking area; and if the tracking area in which the terminal device is currently located is the second tracking area, the terminal device skips performing the TAU; and/or if the tracking area in which the terminal device is currently located is not the second tracking area, the terminal device performs the TAU. The second tracking area is a tracking area corresponding to the second tracking area identity.

In a possible design, the terminal may further perform the following step: The terminal device receives a paging message sent by the access network device.

In a possible design, that the terminal device receives tracking area information from an access network device may be specifically implemented as: The terminal device receives a system message broadcast by the access network device, where the system message carries the tracking area information.

According to a second aspect, an embodiment of this application provides a communication method, where the method is used in an access network device or a chip in an access network device. The method includes: The access network device sends tracking area information to a terminal device, where the tracking area information includes a first tracking area identity and a second tracking area identity. The first tracking area identity is a tracking area identity of a first cell in which the terminal device is located, and the second tracking identity is used by the terminal device to perform a TAU.

In a possible design, the access network device may further perform the following step: The access network device determines the first tracking area identity and the second tracking area identity.

In a possible design, that the access network device determines the first tracking area identity and the second tracking area identity may be specifically implemented as: The access network device receives the first tracking area identity and the second tracking area identity from a core network device; or the first tracking area identity and the second tracking area identity are preconfigured in the access network device.

In a possible design, the tracking area information further includes a time parameter, where the time parameter is used to configure a timer of a terminal, and timing duration of the timer is T.

In a possible design, the access network device may further perform the following step: The access network device receives a paging message from the core network device, and broadcasts the paging message.

In a possible design, that the access network device sends tracking area information to a terminal device may be specifically implemented as: The access network device broadcasts a system message, where the system message carries the tracking area information.

In a possible design of the first aspect or the second aspect, a start moment of the timer is a first moment, where the first moment is a moment at which the terminal device camps on the first cell or is handed over to the first cell, a moment at which the terminal device enters an inactive mode, or a moment at which the terminal device performs the TAU.

In a possible design of the first aspect or the second aspect, the second tracking area identity is an identity of a tracking area that the terminal device is expected to arrive when the timer expires.

According to a third aspect, an embodiment of this application provides a communication method, where the method is used in a core network device or a chip in a core network device. The method includes:

The core network device receives service data corresponding to a terminal device at a second moment. The core network device sends a paging message in a third tracking area TA, where a time interval between the second moment and a third moment is greater than first duration; or the core network device sends a paging message in a fourth TA and/or at least one fifth TA, where a time interval between the second moment and a third moment is less than or equal to first duration.

The third moment is a moment, before the second moment, at which the core network device determines a latest TA in which the terminal device is located, a moment at which the terminal device performs registration by using the core network device, or a moment at which the terminal device performs a latest TAU.

According to the communication method provided in this embodiment of this application, when the core network device receives the service data corresponding to the terminal at the second moment, the core network device may initiate paging in different TAs based on different cases. Specifically, if the time interval between the second moment and the third moment is greater than the first duration, the core network device sends the paging message in the third TA; or if the time interval between the second moment and the third moment is less than or equal to the first duration, the core network device sends the paging message in a first TA and/or at least one second TA. On one hand, when the time interval between the second moment and the third moment is greater than the first duration, the core network device may send the paging message only in one third TA. In other words, the core network device may initiate paging in a relatively small area, to reduce paging signaling overheads. On the other hand, when the time interval between the second moment and the third moment is less than or equal to the first duration, the core network device may initiate paging in at least one TA, to improve a paging success probability.

In a possible design, the third TA is a TA in which the terminal device is located at the second moment, the fourth TA is a TA in which the terminal device is located at the third moment, and each fifth TA is a TA that the terminal device is expected to arrive from the third moment and at intervals of the first duration.

In a possible design, if the core network device fails to page the terminal device, the core network device sends the paging message in one or more TAs adjacent to the fourth TA and/or one or more TAs adjacent to each fifth TA in the at least one fifth TA.

According to a fourth aspect, an embodiment of this application provides a communication method, where the method is used in a terminal or a chip in a terminal. The method includes: A terminal device receives RNA information from an access network device, and determines, based on a second RNA identity, whether to perform an RNAU. The RNA information includes a first RNA identity and a second RNA identity, where the first RNA identity is an RNA identity of a fifth cell in which the terminal device is located, and the second RNA identity is used by the terminal device to perform the RNAU.

In a possible design, the RNA information further includes a time parameter.

That the terminal device determines, based on a second RNA identity, whether to perform an RNAU may be implemented as: The terminal device determines, based on the time parameter and the second RNA identity, whether to perform the RNAU.

In a possible design, the time parameter is used to configure a timer, and timing duration of the timer is T.

That the terminal device determines, based on the time parameter and the second RNA identity, whether to perform the RNAU may be specifically implemented as: When the timer expires, the terminal device determines, based on the second RNA identity, whether to perform the RNAU.

In a possible design, that the terminal device determines, based on a second RNA identity, whether to perform an RNAU may be specifically implemented as: When the timer expires, the terminal device determines whether an RNA in which the terminal device is currently located is a second RNA; and if the RNA in which the terminal device is currently located is the second RNA, the terminal device skips performing the RNAU; and/or if the RNA in which the terminal device is currently located is not the second RNA, the terminal device performs the RNAU. The second RNA is an RNA corresponding to the second RNA identity.

In a possible design, the terminal device may further perform the following step: The terminal device receives a paging message sent by the access network device.

In a possible design, that the terminal device receives RNA information from an access network device may be specifically implemented as: The terminal device receives a system message broadcast by the access network device, where the system message carries the RNA information.

According to a fifth aspect, an embodiment of this application provides a communication method, where the method is used in an access network device or a chip in an access network device. The method includes: The access network device sends RNA information to a terminal device, where the RNA information includes a first RNA identity and a second RNA identity, the first RNA identity is an RNA identity of a fifth cell in which the terminal device is located, and the second route identity is used by the terminal device to perform an RNAU.

In a possible design, that the access network device sends RNA information to a terminal device may be specifically implemented as: The access network device broadcasts a system message, where the system message carries the RNA information.

In a possible design, the access network device may further perform the following step: The access network device receives service data corresponding to the terminal device at a fifth moment. The access network device sends a paging message in a third RNA, where a time interval between the fifth moment and a sixth moment is greater than second duration; or the access network device sends a paging message in a fourth RNA and/or at least one fifth RNA, where a time interval between the fifth moment and a sixth moment is less than or equal to second duration.

The sixth moment is a moment, before the fifth moment, at which the access network device determines a latest RNA in which the terminal device is located.

In a possible design, the third RNA is an RNA in which the terminal device is located at the fifth moment, the fourth RNA is an RNA in which the terminal device is located at the sixth moment, and each fifth RNA is an RNA that the terminal device is expected to arrive from the sixth moment and at intervals of the second duration.

In a possible design, if the access network device fails to page the terminal device, the access network device sends the paging message in one or more RNAs adjacent to the fourth RNA and/or one or more RNAs adjacent to each fifth RNA in the at least one fifth RNA.

In a possible design, the RNA information further includes a time parameter, where the time parameter is used to configure a timer of a terminal, and timing duration of the timer is T.

A start moment of the timer is a fourth moment, where the fourth moment is a moment at which the terminal device camps on the fifth cell or is handed over to the fifth cell, a moment at which the terminal device enters an inactive mode, or a moment at which the terminal device performs a TAU.

The second RNA identity is an identity of an RNA that the terminal device is expected to arrive when the timer expires.

According to a sixth aspect, an embodiment of this application provides a communications apparatus, including:
a receiving module, configured to receive tracking area information from an access network device, where the tracking area information includes a first tracking area identity and a second tracking area identity, the first tracking area identity is a tracking area identity of a first cell in which a terminal device is located, and the second tracking area identity is used by the terminal device to perform a tracking area update TAU; and a processing module, configured to determine, based on the second tracking area identity, whether to perform the TAU.

In a possible design, the tracking area information further includes a time parameter.

That the processing module is configured to determine, based on the second tracking area identity, whether to perform the TAU includes: The processing module is configured to determine, based on the time parameter and the second tracking area identity, whether to perform the TAU.

In a possible design, the time parameter is used to configure a timer, and timing duration of the timer is T.

That the processing module is configured to determine, based on the time parameter and the second tracking area identity, whether to perform the TAU includes:

The processing module is configured to: when the timer expires, determine, based on the second tracking area identity, whether to perform the TAU.

In a possible design, a start moment of the timer is a first moment, where the first moment is a moment at which the terminal device camps on the first cell or is handed over to the first cell, a moment at which the terminal device enters an inactive mode, or a moment at which the terminal device performs the TAU.

In a possible design, the second tracking area identity is different from the first tracking area identity.

In a possible design, that the processing module is configured to determine, based on the second tracking area identity, whether to perform the TAU includes: The processing module is configured to: when the timer expires, determine whether a tracking area in which the terminal device is currently located is a second tracking area, where the second tracking area is a tracking area corresponding to the second tracking area identity; and if the tracking area in which the terminal device is currently located is the second tracking area, the terminal device skips performing the TAU; and/or if the tracking area in which the terminal device is currently located is not the second tracking area, the terminal device performs the TAU.

In a possible design, the receiving module is further configured to receive a paging message sent by the access network device.

In a possible design, that the receiving module is configured to receive tracking area information from an access network device includes: The receiving module is configured to receive a system message broadcast by the access network device, where the system message carries the tracking area information.

According to a seventh aspect, an embodiment of this application provides a communications apparatus, including:
a sending module, configured to send tracking area information to a terminal device, where the tracking area information includes a first tracking area identity and a second tracking area identity, the first tracking area identity is a tracking area identity of a first cell in which the terminal device is located, and the second tracking identity is used by the terminal device to perform a tracking area update TAU.

In a possible design, the communications apparatus further includes: a determining module, configured to determine the first tracking area identity and the second tracking area identity.

In a possible design, that the determining module is configured to determine the first tracking area identity and the second tracking area identity includes: The determining module is configured to receive the first tracking area identity and the second tracking area identity from a core network device; or the first tracking area identity and the second tracking area identity are preconfigured in an access network device, and the determining module determines the first tracking area identity and the second tracking area identity based on the preconfigured information.

In a possible design, the tracking area information further includes a time parameter, where the time parameter is used to configure a timer of a terminal, and timing duration of the timer is T.

In a possible design, a start moment of the timer is a first moment, where the first moment is a moment at which the terminal device camps on the first cell or is handed over to the first cell, a moment at which the terminal device enters an inactive mode, or a moment at which the terminal device performs the TAU.

In a possible design, the second tracking area identity is different from the first tracking area identity.

In a possible design, the communications apparatus further includes a broadcasting module.

A receiving module is further configured to receive a paging message from the core network device by the access network device.

The broadcasting module is configured to broadcast the paging message.

In a possible design, that the sending module is configured to send tracking area information includes: The sending module is configured to broadcast a system message, where the system message carries the tracking area information.

According to an eighth aspect, an embodiment of this application provides a communications apparatus, and the communications apparatus includes:
a receiving module, configured to receive service data corresponding to a terminal device at a second moment; and
a sending module, configured to: send a paging message in a third tracking area TA, where a time interval between the second moment and a third moment is greater than first duration; or send a paging message in a fourth TA and/or at least one fifth TA where a time interval between the second moment and a third moment is less than or equal to first duration.

The third moment is a moment, before the second moment, at which a core network device determines a latest TA in which the terminal device is located, a moment at which the terminal device performs registration by using the core network device, or a moment at which the terminal device performs a latest tracking area update TAU.

In a possible design, the third TA is a TA in which the terminal device is located at the second moment, the fourth TA is a TA in which the terminal device is located at the third moment, and each fifth TA is a TA that the terminal device is expected to arrive from the third moment and at intervals of the first duration.

In a possible design, the sending module is configured to: if the core network device fails to page the terminal device, send the paging message in one or more TAs adjacent to the fourth TA and/or one or more TAs adjacent to each fifth TA in the at least one fifth TA.

According to a ninth aspect, an embodiment of this application provides a communications apparatus, where the apparatus has a function of implementing the communication method according to any one of the foregoing aspects. The function may be implemented by hardware, or may be implemented by hardware by executing corresponding software. The hardware or the software includes one or more modules corresponding to the foregoing function.

According to a tenth aspect, a communications apparatus is provided, including: a processor and a memory. The memory is configured to store a computer-executable instruction, and when the communications apparatus runs, the processor executes the computer-executable instruction stored in the memory, so that the communications apparatus performs the communication method according to any one of the foregoing aspects.

According to an eleventh aspect, a communications apparatus is provided, including a processor. The processor is configured to: after being coupled to a memory and reading an instruction in the memory, perform, based on the instruction, the communication method according to any one of the foregoing aspects.

According to a twelfth aspect, a computer-readable storage medium is provided, where the computer-readable storage medium stores an instruction, and when the instruction is run on a computer, the computer is enabled to perform the communication method according to any one of the foregoing aspects

According to a thirteenth aspect, a computer program product including an instruction is provided. When the instruction is run on a computer, the computer is enabled to perform the communication method according to any one of the foregoing aspects.

According to a fourteenth aspect, a circuit system is provided, where the circuit system includes a processing circuit, and the processing circuit is configured to perform the communication method according to any one of the foregoing aspects.

According to a fifteenth aspect, a chip is provided, where the chip includes a processor. The processor is coupled to a memory, the memory stores a program instruction, and when the program instruction stored in the memory is executed by the processor, the communication method according to any one of the foregoing aspects is implemented.

According to a sixteenth aspect, a communications system is provided, where the communications system includes the terminal device in any one of the foregoing aspects, the access network device in any one of the foregoing aspects, and the core network device in any one of the foregoing aspects.

For technical effects brought by any design manner of the second to the sixteenth aspects, refer to technical effects brought by different design manners of the first aspect, and details are not described herein again.

### BRIEF DESCRIPTION OF DRAWINGS

FIG. 1 is a schematic diagram of a communications system according to an embodiment of this application;
FIG. 2 is a schematic structural diagram of a communications device according to an embodiment of this application;
FIG. 3 is a flowchart of a communication method according to an embodiment of this application;
FIG. 4 is a flowchart of a communication method according to an embodiment of this application;
FIG. 5 is a flowchart of a communication method according to an embodiment of this application;
FIG. 6 is a flowchart of a communication method according to an embodiment of this application;
FIG. 7 is a flowchart of a communication method according to an embodiment of this application;
FIG. 8 is a schematic diagram of a scenario of a communication method according to an embodiment of this application;
FIG. 9 is a schematic diagram of a scenario of a communication method according to an embodiment of this application;
FIG. 10 is a schematic diagram of a scenario of a communication method according to an embodiment of this application;
FIG. 11 is a schematic diagram of a scenario of a communication method according to an embodiment of this application;
FIG. 12 is a schematic structural diagram of a communications apparatus according to an embodiment of this application;
FIG. 13 is a schematic architectural diagram of a possible communications system to which an embodiment of this application is applicable;
FIG. 14 is a schematic architectural diagram of another possible communications system to which an embodiment of this application is applicable;
FIG. 15 is a schematic diagram of a BWP according to an embodiment of this application;
FIG. 16 is a schematic flowchart of a communication method according to an embodiment of this application;
FIG. 17 is a schematic diagram of a bandwidth size of an initial BWP and a bandwidth size of a RAR CORESET according to an embodiment of this application;
FIG. 18 is a schematic structural diagram of a device according to an embodiment of this application;
FIG. 19 is a schematic structural diagram of another device according to an embodiment of this application; and
FIG. 20 is a schematic structural diagram of a communications system according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having" and any other variant thereof mentioned in descriptions of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in the embodiments of this application, the word such as "example" or "for example" is used to represent giving an example, an illustration, or a description. Any embodiment or design scheme described as the word "example" or "for example" in the embodiments of this application should not be explained as being more preferred or having more advantages than another embodiment or design scheme. Exactly, use of the word such as "example" or "for example" is intended to present a related concept in a specific manner.

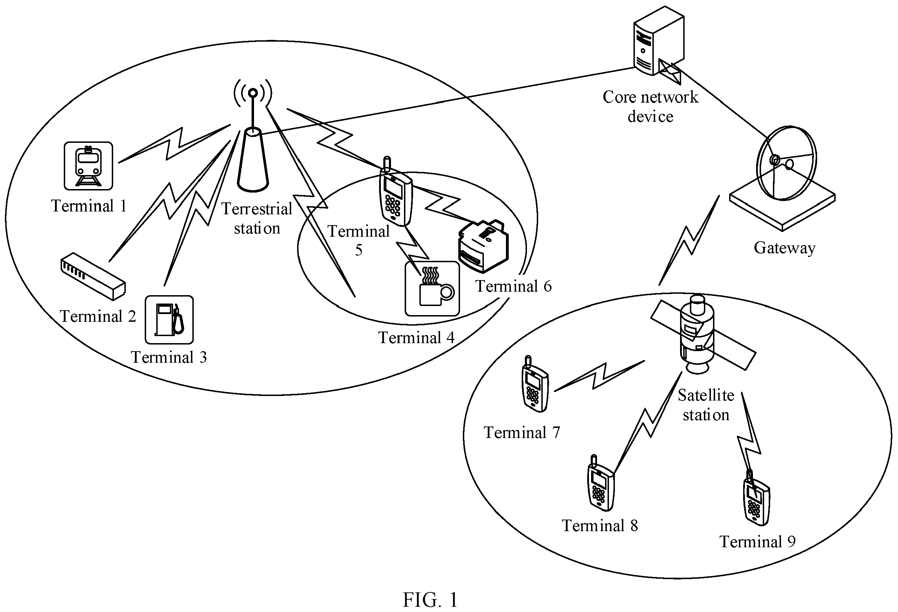

A system architecture in the embodiments of this application is first provided. As shown in FIG. 1, the system includes an access network device, a plurality of terminal devices that communicate with the access network device, and a core network device that communicates with the access network device (only one core network device is shown as an example in the figure).

The communications system shown in FIG. 1 may be used in a current long term evolution (Long Term Evolution, LTE) system or an advanced long term evolution (LTE Advanced, LTE-A) system, or may be used in a 5G network that is currently being formulated or another future network. Certainly, the communications system may be further used in an LTE and 5G hybrid networking system or another system. This is not specifically limited in this embodiment of this application. In different networks, the core network device, the access network device, and the terminal device in the foregoing communications system may correspond to different names. A person skilled in the art may understand that the names do not constitute a limitation on the devices.

The core network device referred to in this embodiment of this application is an apparatus that is deployed in a core network and that is configured to provide a service for a terminal. In systems using different radio access technologies, core network devices having a similar wireless communication function may have different names. For example, when the capability reporting method in the embodiments of this application is used in a 5G system, the core network device may be an access and mobility management function (AMF, Access and Mobility Management Function). When the capability reporting method is used in the LTE system, the core network device may be a mobility management entity (Mobility Management Entity, MME). For ease of description only, in the embodiments of this application, the foregoing apparatuses that can provide a service for the terminal are collectively referred to as the core network device.

The access network device is an apparatus that is deployed in a radio access network and that is configured to provide a wireless communication function. The access network device in the embodiments of this application may be a terrestrial station deployed on land, or may be a high altitude station deployed at heights. A high altitude station is a satellite station or a high altitude platform that has a wireless communication function, or a communications device that is in another form and that is deployed at heights. Specifically, a wireless communication function of the terrestrial station or a portion of wireless communication functions of the terrestrial station may be deployed in the high altitude station. Optionally, the terrestrial station in the embodiments of this application includes, for example, but is not limited to, a macro base station, a micro base station (also referred to as a small cell), a relay node, a transmission reception point (Transmission Reception Point, TRP), a next generation NodeB (g Node B, gNB), a ng-eNB (ng evolved NodeB, ng-eNB) connected to a next-generation core network, and the like in various forms, and may further include a radio access network device in a non-3GPP system, such as a wireless local area network (wireless local area network, WLAN) access device.

The terminal device is mainly configured to receive or send data. Optionally, the terminal in the embodiments of this application may include, for example, but is not limited to, various handheld devices, vehicle-mounted devices, wearable devices, or computing devices that have a wireless communication function, or other processing devices connected to a wireless modem; and the terminal may further include a subscriber unit (subscriber unit), a cellular phone (cellular phone), a smartphone (smart phone), a wireless data card, a personal digital assistant (personal digital assistant, PDA) computer, a tablet computer, a handheld (handheld) device, a laptop computer (laptop computer), a machine type communication (machine type communication, MTC) terminal (terminal), user equipment (user equipment, UE), and the like. In the embodiments of this application, the terminal device may also be referred to as a terminal. A general description is provided herein, and details are not described below.

In FIG. 1, a core network device, a terrestrial station, a satellite station, and a plurality of terminals form a communications system. In the communications system, a terminal 1 to a terminal 6 may send uplink data or signaling to the terrestrial station, and the terrestrial base station may receive the uplink data or the signaling separately sent by the terminal 1 to the terminal 6. Similarly, the terrestrial station may send downlink data or signaling to the terminal 1 to the terminal 6, and the terminal 1 to the terminal 6 may receive the downlink data or the signaling from the terrestrial station.

In addition, the terminal 4 to the terminal 6 may also form a sub-communications system. In the sub-communications system, the terminals 4, 5, and 6 may communicate with each other. Certainly, one of the three terminals may also be used as a relay node to transmit information between the terrestrial station and another terminal. For example, after the terminal 5 enables a hotspot, the terminal 4 and the terminal 6 may exchange information with the terrestrial station by using the hotspot of the terminal 5.

In some other areas, for example, a desert or an area that is difficult to be covered by a conventional terrestrial station, a terminal 7 to a terminal 9 may exchange information with the core network device by using the satellite station, to ensure normal execution of a service.

Optionally, the communications system shown in FIG. 1 may further include a gateway, and the core network device may communicate with the satellite station by using the gateway.

It should be emphasized that the communications system includes a plurality of satellite stations, a plurality of terrestrial stations, and a plurality of core network devices. FIG. 1 shows only an example of one terrestrial station, one satellite station, and one core network device.

Optionally, all or some network elements in FIG. 1 may be physical entity network elements, or may be virtualized network elements. This is not limited herein.

In addition, a communications system architecture and a service scenario that are described in the embodiments of this application are intended to describe the technical solutions in the embodiments of this application more clearly, and do not constitute a limitation to the technical solutions provided in the embodiments of this application. A person of ordinary skill in the art may know that with evolution of network architectures and emergence of new service scenarios, the technical solutions provided in the embodiments of this application are also applicable to similar technical problems.

Optionally, the terminal, the access network device, and the core network device in FIG. 1 may be separately implemented by a plurality of devices. The access network device and the core network device may alternatively be implemented by one device. For example, the access network device and the core network device are implemented as different function modules in one device. This is not specifically limited in this embodiment of this application. It may be understood that the foregoing function modules may be network elements in a hardware device, or may be software functions run on a hardware device, or may be virtualization functions instantiated on a platform (for example, a cloud platform).

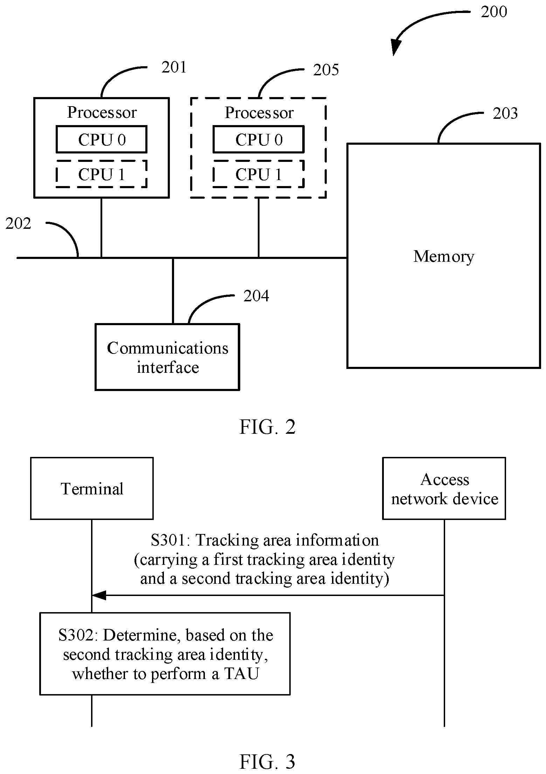

For example, the terminal, the access network device, and the core network device in this embodiment of this application may be implemented as the communications device in FIG. 2. FIG. 2 is a schematic structural diagram of hardware of a communications device 200 according to an embodiment of this application. The communications device 200 includes at least one processor 201, a communications line 202, a memory 203, and at least one communications interface 204.

The processor 201 may be a general-purpose central processing unit (central processing unit, CPU), a microprocessor, an application-specific integrated circuit (application-specific integrated circuit, ASIC), or one or more integrated circuits that are configured to control execution of a program in a solution of this application.

The communications line 202 may include a path for transmitting information between the foregoing components.

The communications interface 204 uses any apparatus such as a transceiver, to communicate with another device or a communications network, for example, the Ethernet, a radio access network (radio access network, RAN), or a wireless local area network (wireless local area networks, WLAN).

The memory 203 may be a read-only memory (read-only memory, ROM) or another type of static storage device that can store static information and instructions, or random access memory (random access memory, RAM) or another type of dynamic storage device that can store information and instructions. The memory 203 may alternatively be an electrically erasable programmable read-only memory (electrically erasable programmable read-only memory, EEPROM) and a compact disc read-only memory (compact disc read-only memory, CD-ROM) or another compact disc storage, optical disc storage (including a compact disc, a laser disc, an optical disc, a digital versatile disc, a Blu-ray optical disc, and the like) and a magnetic disk storage medium or another magnetic storage device. The memory 203 may alternatively be any other medium that can be used to carry or store expected program code in a form of an instruction or a data structure and that can be accessed by a computer, but is not limited thereto. The memory may exist independently, and is connected to the processor through the communications line 202. Alternatively, the memory may be integrated with the processor.

The memory 203 is configured to store a computer-executable instruction for performing the solutions in this embodiment of this application, and the processor 201 controls the execution. The processor 201 is configured to execute the computer-executable instruction stored in the memory 203, to implement the communication methods provided in the following embodiments of this application.

Optionally, the compute-executable instruction in the embodiments of this application may also be referred to as application program code. This is not specifically limited in the embodiments of this application.

During specific implementation, in an embodiment, the processor 201 may include one or more CPUs, for example, a CPU 0 and a CPU 1 in FIG. 2.

During specific implementation, in an embodiment, the communications device 200 may include a plurality of processors, for example, the processor 201 and a processor 205. Each of the processors may be a single-core (single-CPU) processor or a multi-core (multi-CPU) processor. The processor herein may refer to one or more devices, circuits, and/or processing cores configured to process data (for example, a computer program instruction).

It may be understood that FIG. 2 shows only an example of a schematic diagram of a hardware structure of a communications device. To implement the technical solution in this embodiment of this application, the communications device 200 may further include another component. This is not limited in this embodiment of this application.

The foregoing communications device 200 may be a general-purpose device or a dedicated device. In specific implementation, the communications device 200 may be a device having a structure similar to that in FIG. 2. A type of the communications device 200 is not limited in this embodiment of this application.

The following describes in detail a communication method provided in the embodiments of this application.

It should be noted that names of messages between network elements, names of parameters in the messages, or the like in the following embodiments of this application are merely examples, and there may be other names in specific implementation. A general description is provided herein, and details are not described below.

An embodiment of this application provides a communication method, and the communication method is used in a terminal location management process. Refer to FIG. 3. The communication method includes the following steps.

S301: An access network device sends tracking area information to a terminal device.

Correspondingly, the terminal device receives the tracking area information from the access network device.

The tracking area information includes a first tracking area identity and a second tracking area identity, where the first tracking area identity is a tracking area identity of a first cell in which the terminal device is located, the second tracking area identity is an identity of a tracking area that the terminal device is expected to arrive when a timer expires, and the second tracking area identity is used by the terminal device to perform a TAU.

Optionally, the tracking area information further includes a time parameter. The time parameter is used to configure the timer. Timing duration of the timer is T1, and a start moment of the timer is a first moment. Certainly, the time parameter may also be preconfigured on the terminal. After receiving the first tracking area identity and the second tracking area identity that are sent by the access network device, the terminal may enable the timer at the first moment based on the preconfigured time parameter.

Optionally, the first moment is related to a status of the terminal. For example, the first moment is a moment at which a terminal device in an idle mode camps on the first cell, or the first moment is a moment at which a terminal in a connected mode is handed over to the first cell, or a moment at which the terminal device enters an inactive mode, or a moment at which the terminal device performs the TAU.

There may be a plurality of implementations in which the terminal device receives the tracking area information from the access network device. Optionally, the terminal device receives a system message broadcast by the access network device, where the system message carries the tracking area information. Alternatively, the terminal device receives radio resource control (Radio Resource Control, RRC) signaling from the access network device, where the RRC signaling carries the tracking area information. Certainly, the terminal may alternatively obtain the tracking area information in another manner. A specific implementation of obtaining the tracking area information by the terminal is not limited in this embodiment of this application.

For example, in a scenario, a terminal in the idle mode receives a system message broadcast by the access network device, the system message carries tracking area information, and the tracking area information includes a first tracking area identity, a second tracking area identity, and a time parameter. Further, the terminal learns that the tracking area identity of the first cell is the first tracking area identity; learns, based on the time parameter, that the timer needs to be started at the first moment, and the timing duration of the timer is T1; and learns, based on the second tracking area identity, of the identity of the tracking area that the terminal is expected to arrive when the timer expires. Optionally, the first moment is a moment at which the terminal camps on the first cell. Subsequently, the terminal may start the timer at the moment at which the terminal camps on the first cell.

For example, in another scenario, the terminal in the connected mode receives the RRC signaling sent by the access network device, the RRC signaling carries the tracking area information, and the tracking area information includes the first tracking area identity, the second tracking area identity, and the time parameter. Further, the terminal learns that the tracking area identity of the first cell is the first tracking area identity; learns, based on the time parameter, that the timer needs to be started at the first moment; and learns, based on the second tracking area identity, of the identity of the tracking area that the terminal is expected to arrive when the timer expires. Optionally, the first moment is a moment at which the terminal is handed over to the first cell. Subsequently, the terminal may start the timer at the moment at which the terminal is handed over to the first cell. Certainly, the terminal in the connected mode may also obtain the tracking area information by reading the system message broadcast by the access network device, to start the timer at the moment at which the terminal is handed over to the first cell.

Optionally, the first tracking area identity and the second tracking area identity may be preconfigured in the access network device. For example, a management platform of the access network device may deliver the first tracking area identity and the second tracking area identity to the access network device in advance, and the access network device stores the first tracking area identity and the second tracking area identity. Optionally, the management platform may be a virtual management module, or a function module in the access network device, or may be an entity or a virtual apparatus that has a corresponding function. The management platform calculates a moving distance of a high altitude station based on a moving speed and a moving time of a high altitude platform or a satellite station (which may be collectively referred to as the high altitude station), and calculates, with reference to a moving track of the high altitude station, TAs in which the terminal is expected to be located at different moments. For example, the management platform may calculate that the terminal is expected to be located in a TA 1 to which a serving cell 1 belongs at a moment 1, the terminal is expected to be located in a TA 2 to which a serving cell 2 belongs at a moment 2, and the terminal is expected to be located in a TA 3 to which a serving cell 3 belongs at a moment 3. A TA in which the terminal is expected to be located at a moment refers to a TA in which the management platform expects the terminal to be located at the moment. Generally, the moving track and the moving speed of the high altitude station are relatively fixed, and a moving track and a moving speed of the terminal are relatively random. Therefore, in a scenario in which the terminal moves at a relatively high speed, the TA in which the management platform expects the terminal to be located at the moment is not equivalent to a TA in which the terminal is actually located at the moment.

It should be noted that the management platform may further send the calculated first tracking area identity and second tracking area identity to the core network device, so that the core network device learns of the TAs in which the terminal is expected to be located at different moments.

Optionally, the access network device obtains the first tracking area identity and the second tracking area identity from the core network device. Specifically, the core network device may calculate TAs in which the terminal is located at different moments, and send the first tracking area identity and the second tracking area identity to the access network device. For a method for calculating the TAs in which the terminal is located by the core network device, refer to related descriptions of calculating the TAs by the management platform. Details are not described herein again.

S302: The terminal device determines, based on the second tracking area identity, whether to perform the TAU.

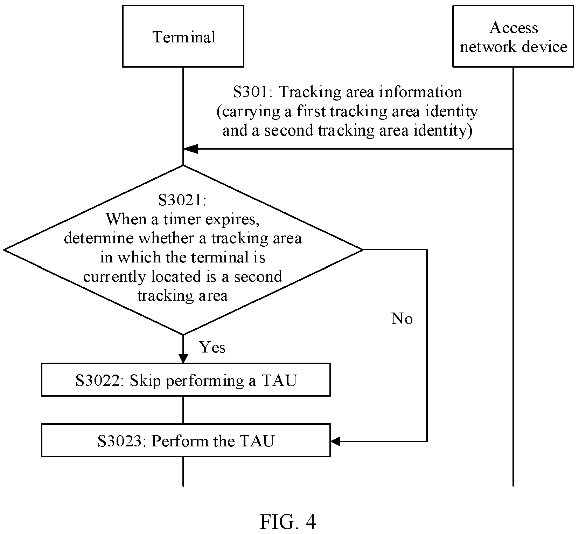

Specifically, refer to FIG. 4, S302 may be implemented as steps S3021 to S3023:

S3021: When the timer expires, the terminal device determines whether a tracking area in which the terminal device is currently located is a second tracking area; and if the tracking area in which the terminal device is currently located is the second tracking area, the terminal device performs S3022; or if the tracking area in which the terminal device is currently located is not the second tracking area, the terminal device performs S3023.

The second tracking area is a tracking area corresponding to the second tracking area identity.

The terminal may learn, by receiving the system message or the RRC signaling sent by the access network device, of the tracking area in which the terminal is located at the moment at which the timer expires.

S3022: The terminal device skips performing the TAU.

It can be learned from the foregoing description that the core network device can learn of the TAs in which the terminal is expected to be located at different moments. Based on this, within the timing duration T1, if the terminal arrives at an expected TA, namely, the second TA, from a first TA in which the first cell is located, the terminal does not need to perform the TAU. In other words, at the moment at which the timer expires, the TA in which the terminal is actually located is consistent with the TA in which the terminal is expected to be located. This is equivalent to that the core network device has learned of the TA in which the terminal is actually located at the moment, and the terminal does not need to perform the TAU.

S3023: The terminal device performs the TAU.

Within the timing duration T1, if the terminal does not arrive at an expected TA (namely, the second TA) from a first TA in which the first cell is located, the terminal performs the TAU. In other words, at the moment at which the timer expires, the TA in which the terminal is actually located is inconsistent with the TA in which the terminal is expected to be located, and the core network device does not know the TA in which the terminal is actually located at the moment. In this case, the terminal needs to perform the TAU, so that the core network device learns of the TA in which the terminal is actually located.

A process of performing the TAU by the terminal is a process in the prior art, and details are not described herein.

According to the communication method provided in this embodiment of this application, the terminal obtains the tracking area information from the access network device, and determines, based on the second tracking area identity, whether to perform the TAU. The tracking area information includes the first tracking area identity and the second tracking area identity, where the first tracking area identity is the tracking area identity of the first cell in which the terminal device is located, and the second tracking area identity is used by the terminal to determine whether to perform the TAU. Compared with the prior art in which because a high altitude station moves at a high speed, the terminal may be triggered to frequently perform the TAU, in the communication method in this embodiment of this application, even if the high altitude station moves at a high speed, and a serving cell of the terminal changes, because a new serving cell of the terminal may be in the second tracking area corresponding to the second tracking area identity, the TAU may not be triggered, thereby reducing a frequency of performing TAU and power consumption of the terminal.

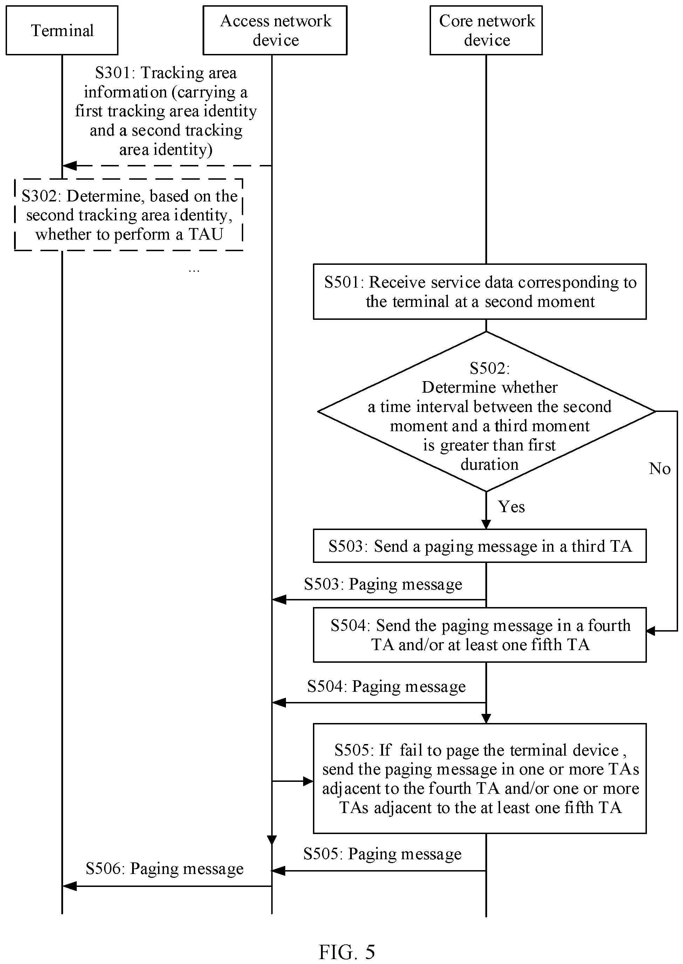

An embodiment of this application further provides a communication method, and the communication method is used in a process in which a core network device pages a terminal. As shown in FIG. 5, the communication method includes the following steps.

S501: The core network device receives service data corresponding to a terminal device at a second moment.

For example, the core network device receives service data that corresponds to the terminal and that is sent by an application server (namely, a WeChat application server) at the second moment.

S502: The core network device determines whether a time interval between the second moment and a third moment is greater than first duration, and if the time interval between the second moment and the third moment is greater than the first duration, the core network device performs S503; or if the time interval between the second moment and the third moment is less than or equal to the first duration, the core network device performs S504.

The first duration is the timing duration T1 of the timer mentioned above.

The third moment is a moment, before the second moment, at which the core network device determines a latest TA in which the terminal device is located. Specifically, the third moment may be a moment at which the terminal device performs registration by using the core network device or a moment at which the terminal device performs a latest TAU. Optionally, when the terminal performs the registration, the terminal sends a registration message to an access network device. The access network device records a moment at which the registration message is received, uses the moment as the third moment, and notifies the core network device of the third moment. Alternatively, after receiving the registration message, the access network device sends the registration message to the core network device, and the core network device records a moment at which the registration message is received, and uses the moment as the third moment. When the terminal performs the TAU, the terminal sends a TAU message to the access network device. The access network device records a moment at which the TAU message is received, uses the moment as the third moment, and notifies the core network device of the third moment. Alternatively, after receiving the TAU message, the access network device sends the TAU message to the core network device, and the core network device records a moment at which the TAU message is received, and uses the moment as the third moment.

Certainly, the third moment may alternatively be determined in another manner. A manner of determining the third moment is not limited in this embodiment of this application.

It should be noted that, in the method procedure shown in FIG. 5, S301 and S302 are optional steps. When the third moment is the moment at which the terminal performs registration by using the core network device, the method procedure shown in FIG. 5 may not include S301 and S302.

S503: The core network device sends a paging message in a third TA.

Correspondingly, the access network device receives the paging (paging) message sent by the core network device.

It should be noted that, that the core network device sends a paging message in a third TA means that the core network device sends the paging message to all access network devices in the third TA.

The paging message includes a terminal identity. The third TA is a TA in which the terminal device is located at the second moment.

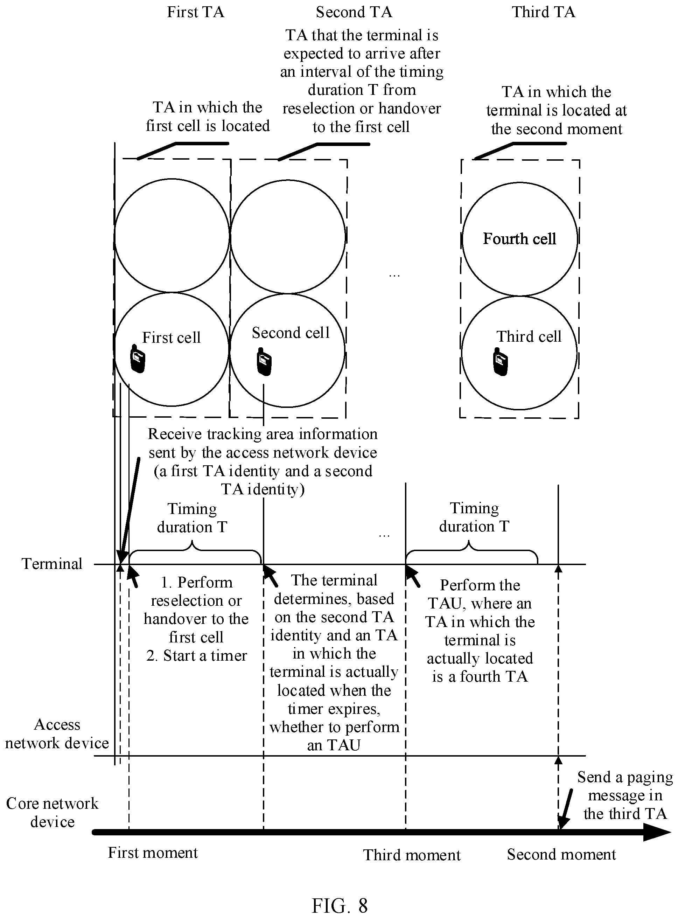

That the third moment is a moment at which the terminal performs a latest TAU is used as an example. Refer FIG. 8, the terminal performs a latest TAU at the third moment, and the core network device determines, based on this, that a latest TA in which the terminal is located is a fourth TA. Then, the core network device initiates paging on the terminal at the second moment when the core network device is triggered by the service data. If the time interval between the second moment and the third moment is greater than the timing duration T1, it indicates that the terminal is not triggered to perform the TAU from the third moment to the timing duration T1. This means that in a period from the third moment to the timing duration T1, a TA in which the terminal is actually located is consistent with an expected TA. This indicates that the expected TA calculated by the core network device (or the management platform mentioned above) is relatively accurate. Therefore, at the second moment, the core network device sends the paging message in the calculated expected TA, namely, the third TA. The core network device may calculate the expected TA based on a moving speed, a moving track, and a moving time of a high altitude station. For a specific calculation method, refer to the foregoing description. Details are not described herein again.

S504: The core network device sends the paging message in the fourth TA and/or at least one fifth TA.

Correspondingly, the access network device receives the paging message sent by the core network device.

Similar to that the core network device sends the paging message in the third TA, that the core network device sends the paging message in the fourth TA and/or the at least one fifth TA means that the core network device sends the paging message to all access network devices in the fourth TA and/or the at least one fifth TA. For meanings of sending, by the core network device, the paging message in one or more TAs in the following, refer to the descriptions herein.

The fourth TA is a TA in which the terminal device is located at the third moment.

Each fifth TA is a TA that the terminal device is expected to arrive from the third moment and at intervals of the first duration. For example, the 1st fifth TA may be a TA that the terminal device is expected to arrive from the third moment and at intervals of the timing duration T1, and the 2nd fifth TA may be a TA that the terminal device is expected to arrive from the third moment and at intervals of two timing duration T1. Herein, the timing duration T1 may be the same or may be different. For example, the first T1 is 10 ms, and the second T1 is 30 ms. Correspondingly, the 1st fifth TA is a TA that the terminal is expected to arrive from the third moment and at intervals of 10 ms, and the 2nd fifth TA is a TA that the terminal is expected to arrive from the third moment and at intervals of 30 ms (10 ms+20 ms).

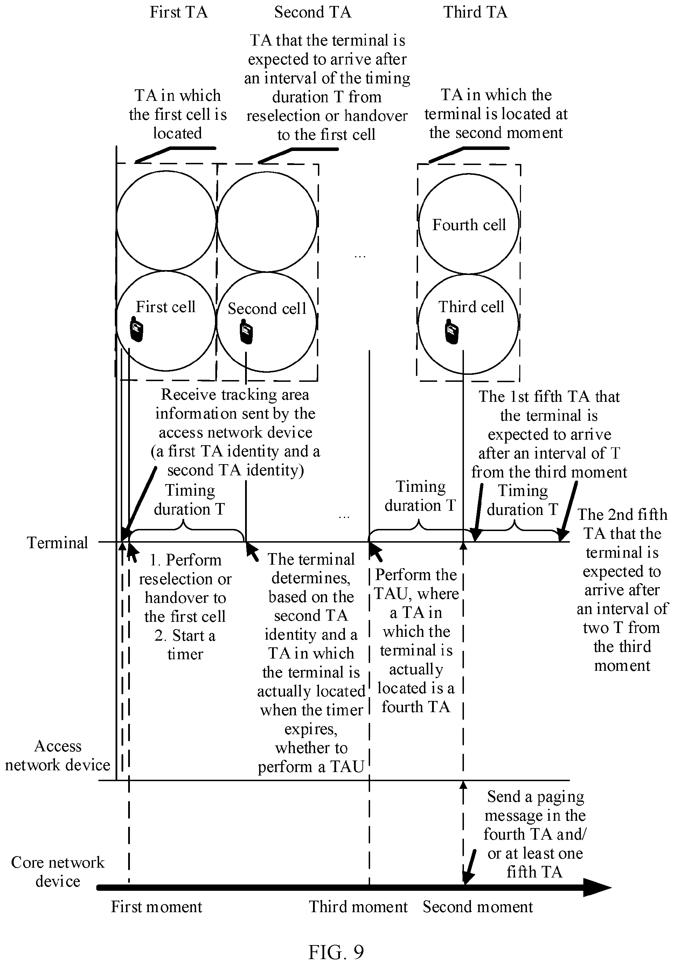

Refer to FIG. 9, in this embodiment of this application, if the time interval between the second moment and the third moment is less than or equal to the timing duration T1, because a moment for determining whether to perform a next TAU (that is, a moment having an interval of the timing duration from the third moment) is not reached, the core network device cannot ensure accuracy of the calculated expected TA. In this case, the core network device may initiate paging in the fourth TA and/or the at least one fifth TA. For example, the core network device may initiate paging only in the fourth TA. In this way, when the terminal moves at a relatively low speed or the terminal does not move, the core network device may successfully page the terminal. In addition, because the core network device initiates paging only in one TA, paging signaling overheads can be reduced. In another example, the core network device may initiate paging in the fourth TA and one fifth TA. In this way, when the terminal moves at a relatively low speed or the terminal does not move, the core network device may successfully page the terminal, and paging signaling overheads can be reduced. Certainly, the core network device may further initiate paging in the fourth TA and a plurality of fifth TAs. In this way, even if the terminal moves at a relatively high speed, a paging success probability may be increased because the core network device initiates paging in a plurality of TAs.

S505: If the core network device fails to page the terminal device, the core network device sends the paging message in one or more TAs adjacent to the fourth TA and/or one or more TAs adjacent to the at least one fifth TA.

Correspondingly, the access network device receives the paging message sent by the core network device.

When the core network device does not receive paging feedback information of the terminal within a specific time, the core network device determines that the core network device the terminal is not paged. In this case, the core network device may initiate paging in another TA. For example, the core network device may initiate paging only in the one or more TAs adjacent to the fourth TA. In this way, when the terminal moves at a relatively low speed or the terminal does not move, the core network device may successfully page the terminal, and the paging signaling overheads can be reduced.

In another example, the core network device may initiate paging in the one or more TAs adjacent to the fourth TA and one or more TAs adjacent to one fifth TA.

Certainly, the core network device may further initiate paging in the one or more TAs adjacent to the fourth TA and TAs separately adjacent to a plurality of fifth TAs (for example, one or more TAs adjacent to the 1st fifth TA and one or more TAs adjacent to the 2nd fifth TA).

It may be learned from S501 to S505 that the core network device may send the paging message in different areas in different cases. The core network device may further send the paging message in the following areas:
Case 1: In an alternative step of S504, if the time interval between the second moment and the third moment is less than or equal to the first duration, the core network device may alternatively send the paging message in the fourth TA and/or one or more TAs adjacent to the fourth TA. For example, the core network device may initiate paging only in the fourth TA, to reduce the paging signaling overheads. For another example, the core network device initiates paging in the one or more TAs adjacent to the fourth TA; and for another example, the core network device may further initiate paging in the fourth TA and the one or more TAs adjacent to the fourth TA.

Correspondingly, S505 may be replaced with that if the core network device does not find the terminal device through paging, the core network device sends the paging message in the at least one fifth TA and/or one or more TAs adjacent to the at least one fifth TA. For example, refer to FIG. 9, the core network device initiates paging in the 1st fifth TA. For another example, the core network device initiates paging in the 1st fifth TA and one or more TAs adjacent to the 1st fifth TA.

Case 2: Certainly, S504 may alternatively be replaced with the following: If the time interval between the second moment and the third moment is less than or equal to the first duration, the core network device sends the paging message in at least one fifth TA and/or one or more TAs adjacent to the at least one fifth TA.

Correspondingly, S505 may be replaced with that if the time interval between the second moment and the third moment is less than or equal to the first duration, the core network device may alternatively send the paging message in the fourth TA and/or one or more TAs adjacent to the fourth TA.

Case 3: If the time interval between the second moment and the third moment is less than or equal to the first duration, the core network device may alternatively send the paging message in the fourth TA and/or the one or more TAs adjacent to the fourth TA, and in the at least one fifth TA and/or the one or more TAs adjacent to the at least one fifth TA.

Certainly, in another case, the core network device may alternatively choose to initiate paging in another area. An area in which the core network device initiates paging is not limited in this embodiment of this application.

S506: The access network device broadcasts the paging message.

Correspondingly, the terminal receives the paging message sent by the access network device.

That the access network device broadcasts the paging message means that the access network device sends the paging message to a terminal managed by the access network device. For a specific meaning of broadcasting the paging message by the access network device in the following, refer to the description herein.

The paging message includes the terminal identity. When monitoring the paging message including the identity of the terminal, the terminal may further parse the paging message, to learn that the service data arrives.

According to the paging method provided in this embodiment of this application, when the core network device receives the service data corresponding to the terminal at the second moment, the core network device may initiate paging in different TAs based on different cases. Specifically, if the time interval between the second moment and the third moment is greater than the first duration, the core network device sends the paging message in the third TA; or if the time interval between the second moment and the third moment is less than or equal to the first duration, the core network device sends the paging message in a first TA and/or at least one second TA. On one hand, when the time interval between the second moment and the third moment is greater than the first duration, the core network device may send the paging message only in one third TA. In other words, the core network device may initiate paging in a relatively small area, to reduce the paging signaling overheads. On the other hand, when the time interval between the second moment and the third moment is less than or equal to the first duration, the core network device may initiate paging in at least one TA, to improve the paging success probability.

An embodiment of this application provides a communication method, and the communication method is used in a process of performing location management on a terminal.

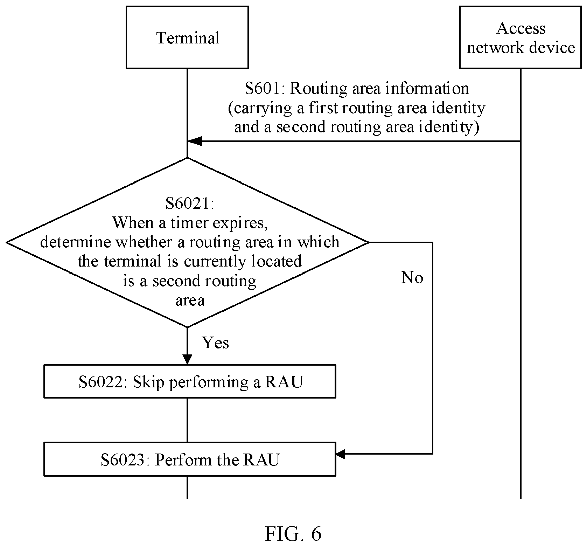

Refer to FIG. 6, the communication method includes the following steps.

S601: An access network device sends radio access network-based notification area (RAN-based notification area, RNA) information to a terminal device.

Correspondingly, the terminal device receives the RNA information from the access network device.

The RNA information includes a first RNA identity and a second RNA identity, where the first RNA identity is an RNA identity of a fifth cell in which the terminal device is located, the second RNA identity is an identity of an RNA that the terminal device is expected to arrive when a timer expires, and the second RNA identity is used by the terminal device to perform a RAN-based notification area update (RAN-based notification area update, RNAU).

Optionally, the RNA information further includes a time parameter. The time parameter is used to configure the timer. Timing duration of the timer is T2, and a start moment of the timer is a fourth moment. Certainly, the time parameter may also be preconfigured on the terminal.

Optionally, the fourth moment is related to a status of the terminal. For example, the fourth moment is a moment at which a terminal device in an idle mode camps on the fifth cell, or the fourth moment is a moment at which a terminal in a connected mode is handed over to the fifth cell, or a moment at which the terminal device enters an inactive mode, or a moment at which the terminal device performs a TAU.

There may exist a plurality of implementations in which the terminal device receives the RNA information from the access network device. Optionally, the terminal device receives a system message broadcast by the access network device, where the system message carries the RNA information. Alternatively, the terminal device receives RRC signaling from the access network device, where the RRC signaling carries the RNA information. Certainly, the terminal may alternatively obtain the RNA information in another manner. A specific implementation of obtaining the RNA information by the terminal is not limited in this embodiment of this application.

Optionally, the first RNA identity and the second RNA identity may be preconfigured in the access network device. For example, a management platform of the access network device may deliver the first RNA identity and the second RNA identity to the access network device in advance, and the access network device stores the first RNA identity and the second RNA identity. The management platform calculates a moving distance of a high altitude station based on a moving speed and a moving time of the high altitude station, and calculates, with reference to a moving track of the high altitude station, RNAs in which the terminal is expected to be located at different moments. Certainly, the access network device may also calculate the RNAs in which the terminal is expected to be located at different moments.

S6021: When the timer expires, the terminal device determines whether an RNA in which the terminal device is currently located is a second RNA; and if the RNA in which the terminal device is currently located is the second RNA, the terminal device performs S6022; or if the RNA in which the terminal device is currently located is not the second RNA, the terminal device performs S6023.

The second RNA is an RNA corresponding to the second RNA identity.

The terminal may learn, by receiving the system message or the RRC signaling sent by the access network device, of the RNA in which the terminal is located at the moment at which the timer expires.

S6022: The terminal device skips performing the RNAU.

It can be learned from the foregoing description that the access network device can learn of the RNAs in which the terminal is expected to be located at different moments. Based on this, within the timing duration T2, if the terminal arrives at an expected RNA, namely, the second RNA, from a first RNA in which the fifth cell is located, the terminal does not need to perform the RNAU. In other words, at the moment at which the timer expires, the RNA in which the terminal is actually located is consistent with the RNA in which the terminal is expected to be located. This is equivalent to that the access network device has learned of the RNA in which the terminal is actually located at the moment, and the terminal does not need to perform the RNAU.

S6023: The terminal device performs the RNAU.

Within the timing duration T2, if the terminal does not arrive at an expected RNA (namely, the second RNA) from a first RNA in which the fifth cell is located, the terminal performs the RNAU. In other words, at the moment at which the timer expires, the RNA in which the terminal is actually located is inconsistent with the RNA in which the terminal is expected to be located, and the access network device does not know the RNA in which the terminal is actually located at the moment. In this case, the terminal needs to perform the RNAU, so that the access network device learns of the RNA in which the terminal is actually located.

A process of performing the RNAU by the terminal is a process in the prior art, and details are not described herein.

According to the communication method provided in this embodiment of this application, the terminal obtains the RNA information from the access network device, and determines, based on the second RNA identity, whether to perform the RNAU. The RNA information includes the first RNA identity and the second RNA identity, where the first RNA is the RNA identity of the fifth cell in which the terminal is located, and the second RNA identity is the identity of the RNA that the terminal is expected to arrive after a specific time. Compared with the prior art in which because a high altitude station moves at a high speed, the terminal may be triggered to frequently perform the RNAU, in the communication method in this embodiment of this application, even if the high altitude station moves at a high speed, and a serving cell of the terminal changes, because a new serving cell of the terminal may be in the second RNA corresponding to the second RNA identity, the RNAU may not be triggered, thereby reducing RNAU frequency and power consumption of the terminal.

An embodiment of this application further provides a communication method, and the communication method is used in a process in which an access network device pages a terminal.

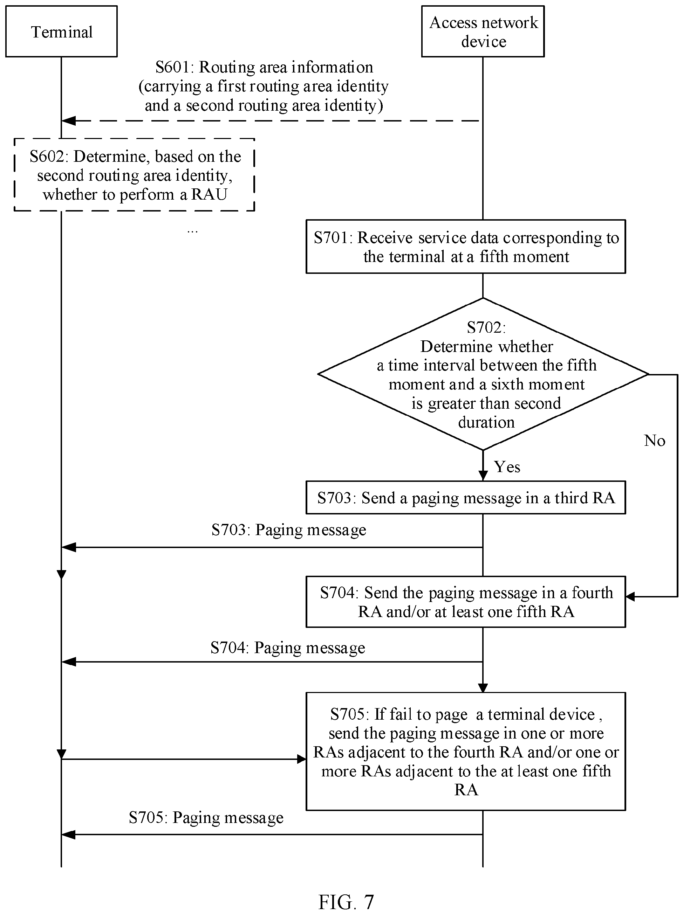

As shown in FIG. 7, the communication method includes the following steps.

S701: The access network device receives service data corresponding to a terminal device at a fifth moment.

For example, the access network device receives service data that corresponds to the terminal and that is sent by an application server (namely, a WeChat application server) at the fifth moment.

S702: The access network device determines whether a time interval between the fifth moment and a sixth moment is greater than second duration, and if the time interval between the fifth moment and the sixth moment is greater than the second duration, the access network device performs S703; or if the time interval between the fifth moment and the sixth moment is less than or equal to the second duration, the access network device performs S704.

The second duration is the timing duration T2 of the timer mentioned above.

The sixth moment is a moment, before the fifth moment, at which the access network device determines a latest RNA in which the terminal device is located. Specifically, the sixth moment may be a moment at which the terminal device performs a latest RNAU. The terminal sends an RNAU message to the access network device. The access network device records a moment at which the RNAU message is received, and uses the moment as the sixth moment. Alternatively, the access network device uses a moment at which the terminal is released to an inactive mode as the sixth moment.

Certainly, the sixth moment may alternatively be determined in another manner. A manner of determining the sixth moment is not limited in this embodiment of this application.

It should be noted that, in the method procedure shown in FIG. 7, S601 and S602 are optional steps.

S703: The access network device sends a paging message in a third RNA.

Correspondingly, the terminal receives the paging message sent by the access network device.

The paging message includes a terminal identity. The third RNA is an RNA in which the terminal device is located at the fifth moment.

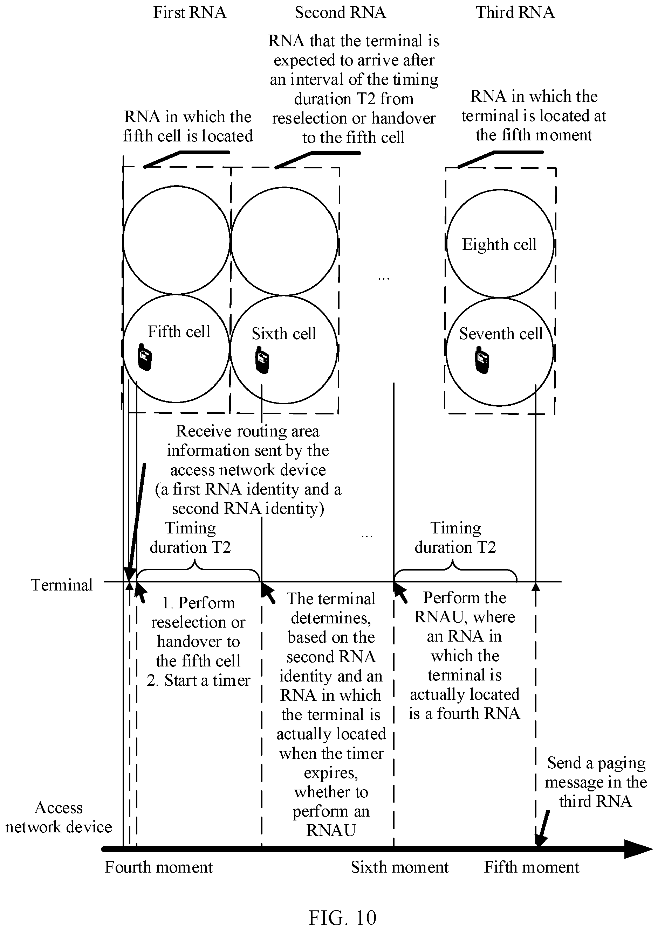

That the sixth moment is a moment at which the terminal performs a latest RNAU is used as an example. Refer to FIG. 10, the terminal performs a latest RNAU at the sixth moment, and the access network device determines, based on this, that a latest RNA in which the terminal is located is a fourth RNA. Then, the access network device initiates paging on the terminal at the fifth moment. If the time interval between the fifth moment and the sixth moment is greater than the timing duration T2, it indicates that the terminal is not triggered to perform the RNAU from the sixth moment to the expiration of the timer. This means that an RNA in which the terminal is actually located is consistent with an expected RNA. This indicates that the expected RNA calculated by the access network device (or the management platform mentioned above) is relatively accurate. Therefore, at the fifth moment, the access network device sends the paging message in the calculated expected RNA, namely, the third RNA. The access network device may calculate the expected RNA based on a moving speed, a moving track, and a moving time of a high altitude station. For a specific calculation method, refer to the foregoing description. Details are not described herein again.

S704: The access network device sends the paging message in the fourth RNA and/or at least one fifth RNA.

Correspondingly, the terminal receives the paging message sent by the access network device.

The fourth RNA is an RNA in which the terminal device is located at the sixth moment.

Each fifth RNA is an RNA that the terminal device is expected to arrive from the sixth moment and at intervals of the second duration. For example, the 1st fifth RNA may be an RNA that the terminal device is expected to arrive from the sixth moment and at intervals of the timing duration T2, and the 2nd fifth RNA may be an RNA that the terminal device is expected to arrive from the sixth moment and at intervals of two timing duration T2. Herein, the timing duration T2 may be the same or may be different. For example, the first T2 is 10 ms, and the second T2 is 30 ms. Correspondingly, the 1st fifth RNA is an RNA that the terminal is expected to arrive from the sixth moment and at intervals of 10 ms, and the 2nd fifth RNA is an RNA that the terminal is expected to arrive from the sixth moment and at intervals of 30 ms (10 ms+20 ms).

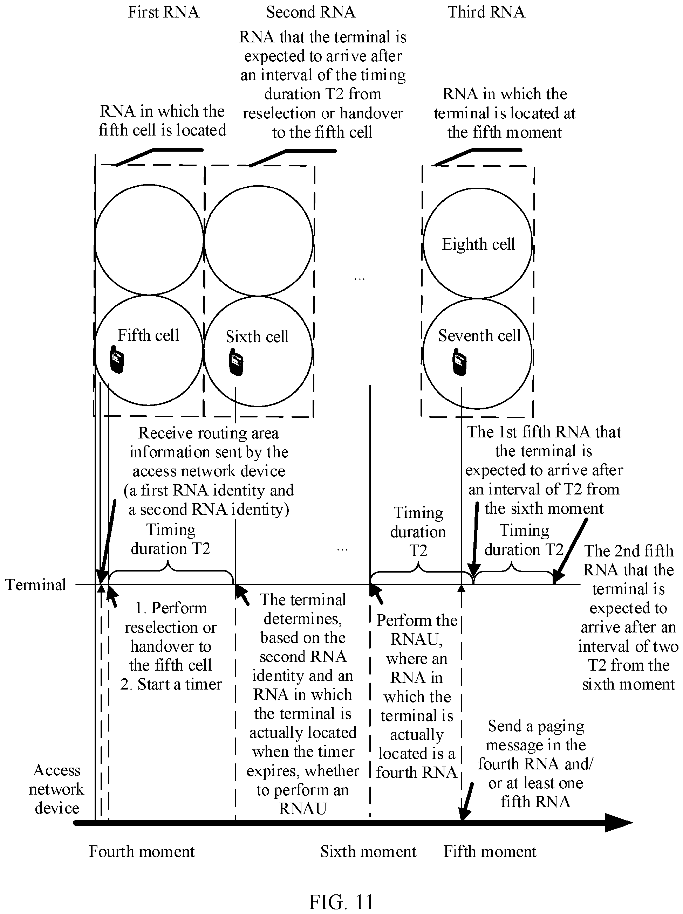

Refer to FIG. 11, in this embodiment of this application, if the time interval between the fifth moment and the sixth moment is less than or equal to the timing duration T2, because a moment for determining whether to perform a next RNAU (that is, a moment having an interval of the timing duration from the sixth moment) is not reached, the access network device cannot ensure accuracy of the calculated expected RNA. In this case, the access network device may initiate paging in the fourth RNA and/or the at least one fifth RNA. For example, the access network device may initiate paging only in the fourth RNA. In this way, when the terminal moves at a relatively low speed or the terminal does not move, the access network device may successfully page the terminal. In addition, because the access network device initiates paging only in one RNA, paging signaling overheads can be reduced. In another example, the access network device may initiate paging in the fourth RNA and one fifth RNA. Certainly, the access network device may further initiate paging in the fourth RNA and a plurality of fifth RNAs.

S705: If the access network device fails to page the terminal device, the access network device sends the paging message in one or more RNAs adjacent to the fourth RNA and/or one or more RNAs adjacent to the at least one fifth RNA.

Correspondingly, the terminal receives the paging message sent by the access network device.

For example, the access network device may initiate paging only in the one or more RNAs adjacent to the fourth RNA. Alternatively, the access network device may initiate paging in the one or more RNAs adjacent to the fourth RNA and one or more RNAs adjacent to one fifth RNA. Certainly, the access network device may further initiate paging in the one or more RNAs adjacent to the fourth RNA and RNAs separately adjacent to a plurality of fifth RNAs (for example, one or more RNAs adjacent to the 1st fifth RNA and one or more RNAs adjacent to the 2nd fifth RNA).

According to the paging method provided in this embodiment of this application, the access network device may initiate paging in different RNAs at the fifth moment based on different cases. Specifically, if the time interval between the fifth moment and the sixth moment is greater than the second duration, the access network device sends the paging message in the third RNA; or if the time interval between the fifth moment and the sixth moment is less than or equal to the second duration, the access network device sends the paging message in a first RNA and/or at least one second RNA. On one hand, when the time interval between the fifth moment and the sixth moment is greater than the second duration, the access network device may send the paging message only in one third RNA, to reduce the paging signaling overheads. On the other hand, when the time interval between the fifth moment and the sixth moment is less than or equal to the second duration, the access network device may initiate paging in at least one RNA, to improve a paging success probability.

It can be understood that, to implement the foregoing functions, a network element in the embodiments of this application includes a corresponding hardware structure and/or software module for executing each function. With reference to the units and algorithm steps described in the embodiments disclosed in this application, the embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions of the embodiments of this application.

In the embodiments of this application, functional unit division may be performed on the network element based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that in the embodiments of this application, division into the units is an example and is merely logical function division, and may be other division in an actual implementation.

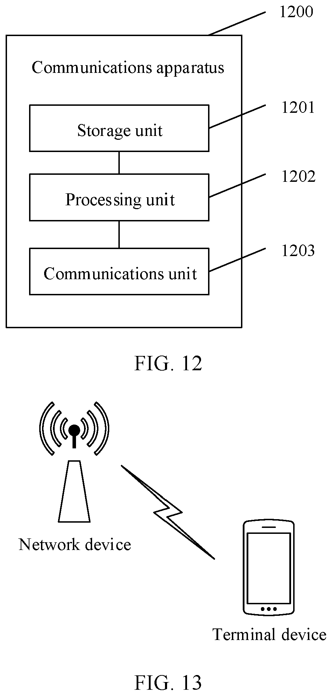

FIG. 12 is a schematic block diagram of a communications apparatus 1200 according to an embodiment of this application. The communications apparatus may be the foregoing terminal, the access network device, or the core network device. The communications apparatus 1200 may exist in a form of software, or may be a chip that can be used in a device. The communications apparatus 1200 includes a processing unit 1202 and a communications unit 1203.

Optionally, the communications apparatus 1200 may further include a storage unit 1201, configured to store program code and data of the communications apparatus 1200. The data may include but is not limited to original data, intermediate data, and the like.

If the communications apparatus 1200 is the terminal, the processing unit 1202 may be configured to support the terminal in performing S302 in FIG. 3 and FIG. 5, S3021 and S3022 or S3023 in FIG. 4, S6021 and S6022 or S6023 in FIG. 6, S602 in FIG. 7, and the like, and/or another process used for the solution described in this specification. The communications unit 1203 is configured to support communication between the terminal and another network element (for example, the foregoing access network device). For example, the communications unit 1203 supports the terminal in performing S301 in FIG. 3, FIG. 4, and FIG. 5, S506 in FIG. 5, S601 in FIG. 6 and FIG. 7, and S703 or S704 in FIG. 7. After not finding the terminal through paging in S703 or S704 in FIG. 7, the communications unit 1203 supports the terminal in performing S705 in FIG. 7, and the like.

If the communications apparatus 1200 is the access network device, the processing unit 1202 may be configured to support the access network device in performing S701 and S702 in FIG. 7, and/or another process used for the solution described in this specification. The communications unit 1203 is configured to support communication between the access network device and another network element (for example, the foregoing core network device or the terminal). For example, the communications unit 1203 supports the access network device in performing S301 in FIG. 3, FIG. 4, and FIG. 5, and S503 or S504 in FIG. 5. After not finding the terminal through paging in S503 or S504 in FIG. 5, the communications unit 1203 supports the access network device in performing S505 and S506 in FIG. 5, S601 in FIG. 6 and FIG. 7, and S703 or S704 in FIG. 7. After not finding the terminal through paging in S703 or S704 in FIG. 7, the communications unit 1203 supports the terminal in performing S705 in FIG. 7, and the like.

If the communications apparatus 1200 is the core network device, the processing unit 1202 may be configured to support the core network device in performing S501 and S502 in FIG. 5, and/or another process used for the solution described in this specification. The communications unit 1203 is configured to support communication between the core network device and another network element (for example, the foregoing access network device). For example, the communications unit 1203 supports the core network device in performing S503 or S504 in FIG. 5. After not finding the terminal through paging in S503 or S504 in FIG. 5, the communications unit 1203 supports the core network device in performing S505, and the like.

In a possible manner, the processing unit 1202 may be a controller or the processor 401 or the processor 405 shown in FIG. 4. For example, the processing unit may be a central processing unit (Central Processing Unit, CPU), a general-purpose processor, a digital signal processor (Digital Signal Processor, DSP), an application-specific integrated circuit (Application Specific Integrated Circuit, ASIC), a field programmable gate array (Field-Programmable Gate Array, FPGA) or another programmable logic device, a transistor logic device, a hardware component, or any combination thereof. The processing unit 1202 may implement or execute various example logical blocks, modules, and circuits described with reference to content disclosed in this application. The processor may alternatively be a combination of processors implementing a computing function, for example, a combination of one or more microprocessors or a combination of a DSP and a microprocessor. The communications unit 1203 may be a transceiver, a transceiver circuit, the communications interface 404 shown in FIG. 4, or the like. The storage unit 1201 may be the memory 403 shown in FIG. 4.

In some other embodiments of this application, a communications method, apparatus, and system are further provided. The communication method is described in detail as follows.

A bandwidth in an NR system is relatively large, and is at least 100 MHz. Due to different capabilities of terminal devices, maximum bandwidths supported by the terminal devices are different. Some terminal devices may support only an 80 MHz, 40 MHz, 20 MHz, or even smaller bandwidth. Therefore, usually, in the NR, a concept of a bandwidth part (bandwidth part, BWP) is introduced to adapt to a requirement of a maximum bandwidth supported by the terminal device.

Specifically, the BWP is currently configured for the terminal device, to adapt to the maximum bandwidth that can be supported by the terminal device. In addition, to flexibly schedule the terminal device, a plurality of BWPs with different bandwidths may be configured for the terminal device.

In the prior art, a base station broadcasts a synchronization signal block (synchronous signal block, SSB) to facilitate camping of the terminal device. The SSB carries a primary synchronization signal (primary synchronization signal, PSS), a secondary synchronization signal (secondary synchronization signal, SSS), and a physical broadcast channel (physical broadcast channel, PBCH). The PBCH carries a master system information block (master information block, MIB). The MIB includes configuration information (for example, a bandwidth size and a frequency domain location of a CORESET 0) of the control resource set (control resource set, CORESET) 0 and configuration information (for example, time domain configuration information of a PDCCH) of a physical downlink control channel (physical downlink control channel, PDCCH) of a SIB 1. After receiving the MIB, the terminal device determines that a bandwidth of an initial BWP (initial BWP) is a bandwidth of the CORESET 0, then receives scheduling information of the SIB 1 on the initial BWP, and receives the SIB 1 on the initial BWP based on the scheduling information of the SIB 1.

To reduce power consumption of the terminal device, generally, a bandwidth of the CORESET 0 configured in the MIB is relatively small. However, in the prior art, to enable the terminal device to meet a service requirement, a bandwidth parameter is carried in the SIB 1, and the bandwidth parameter is used to indicate a reset bandwidth size of the initial BWP. After receiving the SIB 1, the terminal device adjusts the bandwidth size of the initial BWP based on the bandwidth parameter, so that the terminal device works in the initial BWP whose bandwidth size is reset. Generally, the reset bandwidth size of the initial BWP is greater than the bandwidth size of the CORESET 0. Therefore, after the terminal device works in the initial BWP with the reset bandwidth size, for a terminal device in an idle (idle) mode, power consumption of the terminal device is easily increased, thereby reducing performance of the terminal device.

To resolve the foregoing technical problem, an embodiment of this application provides a communications method, apparatus, and system, to help improve flexibility of adjusting the bandwidth size of the initial BWP by the terminal device, thereby improving the performance of the terminal device.

It should be understood that this embodiment of this application may be used in but is not limited to the NR system, and may further be used in communications systems such as a long term evolution (long term evolution, LTE) system, a long term evolution-advanced (long term evolution-advanced, LTE-A) system, and an enhanced long term evolution-advanced technology (enhanced long term evolution-advanced, eLTE) system. This embodiment of this application may further be extended to related cellular systems such as a wireless fidelity (wireless fidelity, Wi-Fi) system, a worldwide interoperability for microwave access (worldwide interoperability for microwave access, wimax) system, and a 3rd generation partnership project (3rd generation partnership project, 3GPP) system.

For example, FIG. 13 is a schematic architectural diagram of a possible communications system to which an embodiment of this application is applicable. The communications system shown in FIG. 13 includes a network device and a terminal device. A quantity of network devices and a quantity of terminal devices in the communications system are not limited in this embodiment of this application. In addition to the network device and the terminal device, the communications system to which this embodiment of this application is applicable may further include other devices such as a core network device, a wireless relay device, and a wireless backhaul device. This is not limited in this embodiment of this application either. In addition, the network device in this embodiment of this application may integrate all functions into one independent physical device, or may distribute the functions on a plurality of independent physical devices. This is not limited in this embodiment of this application either. In addition, the terminal device in this embodiment of this application may be connected to the network device in a wireless manner. It should be further noted that the terminal device in this embodiment of this application may be at a fixed location, or may be mobile.

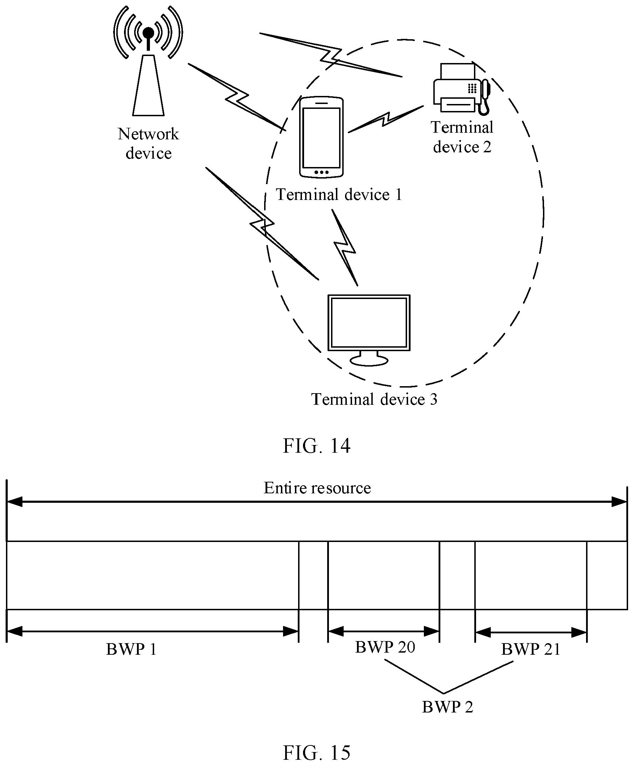

It should be understood that FIG. 13 is merely a schematic architectural diagram of the communications system. In the communications system shown in FIG. 13, the terminal device may send uplink data to the network device, and the network device may send downlink data to the terminal device. In addition, when the quantity of terminal devices included in the communications system shown in FIG. 13 is greater than or equal to 2, the terminal devices may further form a communications system. For example, when the quantity of terminal devices in the communications system shown in FIG. 13 is 3, an architecture of the communications system may be shown in FIG. 14, and includes a network device, a terminal device 1, a terminal device 2, and a terminal device 3. The network device may send downlink data to the terminal device 1, the terminal device 2, and the terminal device 3, and the terminal device 1 may send downlink data to the terminal device 2 and the terminal device 3. This embodiment of this application may also be used in a communications system including the terminal device 1, the terminal device 2, and the terminal device 3. In the communications system including the terminal device 1, the terminal device 2, and the terminal device 3, the terminal device 1 may be equivalent to the network device in this embodiment of this application, and the terminal device 2 and the terminal device 3 are equivalent to the terminal device in this embodiment of this application.

The network device in this embodiment of this application is an entity that is configured to transmit or receive a signal and that is on an access network side, and may be configured to connect the terminal device to the communications system. Specifically, the network device may be a NodeB (NodeB), an evolved NodeB (evolved NodeB, eNB), a base station in 5G, a base station in a future mobile communications system, an access node in a wireless fidelity (wireless fidelity, Wi-Fi) system, or the like. A specific technology and a specific device form that are used by the network device are not limited.

The terminal device in this embodiment of this application is an entity that is configured to transmit or receive a signal and that is on a user side, and may also be referred to as a terminal (terminal), user equipment (user equipment, UE), a mobile station (mobile station, MS), a mobile terminal (mobile terminal, MT), or the like. Specifically, the terminal device may be a mobile phone (mobile phone), a tablet (pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not limited.

It should be understood that the network device and the terminal device in this embodiment of this application may be deployed on land, including an indoor device, an outdoor device, a handheld device, or a vehicle-mounted device; may be deployed on the water; or may be deployed on an airplane, a balloon, and a satellite in the air. Application scenarios of the network device and the terminal device are not limited.

It should be understood that in this embodiment of this application, communication between the network device and the terminal device and communication between terminal devices may be performed by using a licensed spectrum (licensed spectrum), or may be performed by using an unlicensed spectrum (unlicensed spectrum), or may be performed by using both a licensed spectrum and an unlicensed spectrum. This is not limited. Communication between a radio access network device and the terminal device and the communication between the terminal devices may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used between the network device and the terminal device is not limited in this embodiment of this application.

The following describes some terms in the embodiments of this application, to facilitate understanding by a person skilled in the art.
1. Frequency domain resource. The frequency domain resource in the embodiments of this application is a physical resource used for communication in frequency domain. For example, the frequency domain resource may be a BWP, a resource block, or the like.
2. BWP. The BWP in the embodiments of this application is a segment of continuous or discontinuous frequency domain resources. A bandwidth size of the segment of continuous or discontinuous frequency domain resources is less than or equal to a maximum bandwidth supported by a terminal device in frequency domain, and the segment of continuous or discontinuous frequency domain resources may be used to transmit physical channel information or physical signal information. The physical channel information includes physical uplink and downlink control channel information and physical uplink and downlink shared channel information. For example, as shown in FIG. 15, a BWP 1 is a segment of continuous frequency domain resources in an entire communications system bandwidth, and a BWP 2 is a segment of discontinuous frequency domain resources in the entire communications system bandwidth. The BWP 2 includes a BWP 20 and a BWP 21, and the BWP 20 and the BWP 21 are discontinuous BWPs. It should be noted that BWPs of different terminal devices may overlap or may not overlap in frequency domain. This is not limited.
3. Initial BWP. The initial BWP in the embodiments of this application may also be referred to as the initial BWP. In the embodiments of this application, the initial BWP may be an initial downlink BWP (initial downlink BWP, initial DL BWP for short), and may be used to carry a SIB 1 or the like.
4. Terminal device in an idle mode. In the embodiments of this application, the terminal device in the idle mode may also be referred to as idle UE. It should be noted that in the idle (idle) mode, there is no connection between the terminal device and a network side. For example, the terminal device is in the idle mode when the terminal device is powered on.
5. Terminal device in an inactive mode. In the embodiments of this application, the terminal device in the inactive mode may also be referred to as inactive UE. It should be noted that in the inactive (inactive) mode, there is no connection between the terminal device and a network device on an access network side. However, for the terminal device, there is a corresponding connection between the network device on the access network side and a network device on a core network side.
6. Terminal device in a connected mode. In the embodiments of this application, the terminal device in the connected mode may also be referred to as active UE. It should be noted that in the active (connected) mode, the terminal device is connected to the network side. In addition, in the active mode, data may be transmitted between the terminal and the network device.

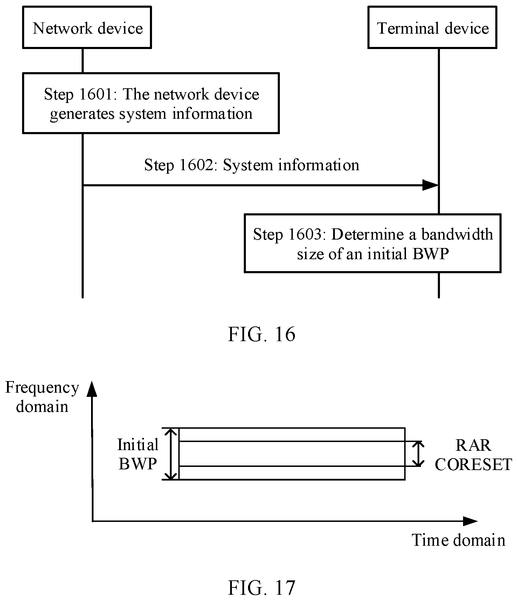

The terminal device determines a bandwidth size of the initial BWP based on a bandwidth parameter configured by the network device. For example, after receiving a MIB on a PBCH, the terminal device determines that the bandwidth size of the initial BWP is a bandwidth size of a CORESET 0 included in the MIB. Then, the terminal device receives the SIB 1 on the initial BWP with the bandwidth size of the CORESET 0. In the prior art, to meet a service requirement, the SIB 1 carries a reset parameter for the bandwidth size of the initial BWP, and then the terminal device resets the bandwidth size of the initial BWP based on the reset parameter. However, for the terminal device, after receiving the SIB 1, if the terminal device resets the bandwidth size of the initial BWP based on the reset parameter, power consumption of the terminal device may increase. For example, when the terminal device is in the idle mode, and a bandwidth size of a reset initial BWP is greater than the bandwidth size of the CORESET 0, the foregoing adjustment manner based on the bandwidth size of the initial BWP causes an increase in the power consumption of the terminal device. Therefore, for the terminal device, flexibility of adjusting the bandwidth size of the initial BWP based on only the bandwidth size of the initial BWP indicated by the bandwidth parameter is relatively poor, and this may cause relatively poor performance of the terminal device. FIG. 17 shows an example of a relationship between a bandwidth size of an initial BWP and a bandwidth size of a RAR CORESET according to an embodiment of this application.

To improve flexibility of adjusting the bandwidth size of the initial BWP, this application provides another embodiment in which a terminal device determines, in different modes, to adjust the bandwidth size of the initial BWP. The following describes this embodiment of this application in detail by using the communications system architecture shown in FIG. 13 as an example. Specifically, as shown in FIG. 16, in one aspect, the communication method in this embodiment of this application mainly includes the following steps.

A terminal device receives a master information block (master information block, MIB) broadcast by a network device, where the MIB includes a first bandwidth parameter, and the first bandwidth parameter is used to indicate that a bandwidth size of an initial bandwidth part BWP of the terminal device is a first bandwidth.

The terminal device receives a system information block (system information block, SIB) broadcast by a network device, where the SIB includes a second bandwidth parameter, and the second bandwidth parameter is used to indicate that the bandwidth size of the initial bandwidth part BWP of the terminal device is a second bandwidth.

The terminal device determines that the bandwidth size of the initial BWP is the first bandwidth or the second bandwidth.

In an optional design, that the terminal device determines that the bandwidth of the initial BWP is the first bandwidth or the second bandwidth includes: The terminal device determines that the bandwidth size of the initial BWP is the first bandwidth, where the terminal device is in an idle mode or an inactive mode.

In an optional design, after the terminal device determines that the bandwidth of the initial BWP is the first bandwidth, the method further includes: The terminal device receives first control information sent by the network device.

In an optional design, after the terminal device receives the first control information, the method further includes:

The terminal device re-determines that the bandwidth size of the initial BWP is the second bandwidth, where the terminal device supports the second bandwidth. It should be noted herein that "re-determine" is merely used to express that after determining that the bandwidth size of the initial BWP is the first bandwidth, the terminal device determines, based on the received first control information, whether to switch the first bandwidth to the second bandwidth. Technically, this may be understood as "determining" or "determining to switch" by the terminal device.

Specifically, the first control information is radio resource control (radio resource control, RRC) reconfiguration information; or the first control information is an RRC resume message or a contention resolution message, and the terminal device is in the inactive mode.

In an optional design, the first control information includes first indication information, where the first indication information is used to indicate whether the terminal device adjusts the bandwidth size of the initial BWP, and the method further includes:

The terminal device determines, based on the first indication information, that the bandwidth size of the initial BWP is the first bandwidth or the second bandwidth, where the first indication information is carried in dedicated RRC signaling.

Optionally, the first control information does not include dedicated BWP configuration information.

Still optionally, the first control information includes the dedicated BWP configuration information, and the method further includes: The bandwidth of the initial BWP of the terminal device is the first bandwidth.

Further optionally, a size of the first bandwidth is greater than a size of the second bandwidth size.

In an optional design, that the terminal device determines, based on the system information, that the bandwidth of the initial BWP is the first bandwidth or the second bandwidth includes: The terminal device determines, based on whether the terminal device supports the first bandwidth, that the bandwidth size of the initial BWP is the first bandwidth or the second bandwidth. For example, if the terminal device supports the first bandwidth, the terminal device determines that the bandwidth size of the initial BWP is the first bandwidth. For another example, if the terminal device does not support the first bandwidth, the terminal device determines that the bandwidth size of the initial BWP is the second bandwidth, where the terminal device is in a connected mode.

In another aspect, the communication method in this embodiment of this application mainly includes the following steps.

A network device generates a MIB, where the MIB includes a first bandwidth parameter, and the first bandwidth parameter is used to indicate that a bandwidth size of an initial bandwidth part BWP of a terminal device is a first bandwidth; the network device generates a SIB, where the SIB includes a second bandwidth parameter, and the second bandwidth parameter is used to indicate that the bandwidth of the initial bandwidth part BWP of the terminal device is a second bandwidth; and the network device broadcasts the MIB and the SIB.

In an optional design, the network device further sends first control information to the terminal device.

Optionally, the first control information is the first RRC reconfiguration message after initial access of the terminal device.

Optionally, the first control information is an RRC resume message or a contention resolution message, and the terminal device is in an inactive mode.

Optionally, the first control information includes first indication information, where the first indication information is used to indicate whether the terminal device adjusts the bandwidth size of the initial BWP. Further, the method further includes: The terminal device performs, based on the first indication information, reselection to determine that the bandwidth size of the initial BWP is the first bandwidth or the second bandwidth, where the first indication information is carried in dedicated RRC signaling.

The following describes an execution process of this embodiment of this application by using an example in which the network device interacts with the terminal device. In this specific embodiment, the following steps may be included (where it should be noted that the following step numbers do not limit an execution sequence of corresponding steps).

Step 1601: The network device generates system information. The system information includes a master information block (master information block, MIB) and a system information block (system information block, SIB). The MIB includes a first bandwidth parameter, where the first bandwidth parameter is used to indicate that a bandwidth size of an initial bandwidth part BWP of the terminal device is a first bandwidth. The SIB includes a second bandwidth parameter, where the second bandwidth parameter is used to indicate that the bandwidth of the initial bandwidth part BWP of the terminal device is a second bandwidth.

Optionally, the first bandwidth parameter is a configuration parameter, in the MIB, of a downlink physical control channel used to schedule a SIB 1, and may indicate a bandwidth of a control resource set CORESET 0, and the first bandwidth is the bandwidth of the CORESET 0.

Optionally, the SIB may be the SIB 1, or may be another system information block, or the like. This is not limited.

In addition, it should be noted that the initial BWP used for the terminal device is an initial BWP used to carry downlink data sent by the network device to the terminal device.

Step 1602: The network device broadcasts the system information. A frequency domain resource used to carry the system information is the initial BWP, and when the initial BWP is used to carry the system information, the bandwidth size of the initial BWP is a first bandwidth size.

Step 1603: The terminal device determines the bandwidth size of the initial BWP. Specifically, the terminal device receives the system information on the initial BWP with the first bandwidth size. It should be noted that, after receiving the system information, the terminal device determines the bandwidth size of the initial BWP to ensure better communication of the terminal device, to correspondingly adjust a bandwidth size of an initial BWP used in current communication. The bandwidth size of the initial BWP used by the terminal device in current communication is the bandwidth size of the initial BWP carrying the system information.

The following explains Step 1603 in detail with reference to different modes of the terminal device.

For example, the terminal device is in a connected mode, and the terminal device determines, based on whether the terminal device supports the second bandwidth, that the bandwidth size of the initial BWP is the first bandwidth or the second bandwidth. Specifically, if the terminal device supports the second bandwidth, the terminal device determines that the bandwidth of the initial BWP is the second bandwidth. If the terminal device does not support the second bandwidth, the terminal device determines that the bandwidth of the initial BWP is the first bandwidth. Therefore, when the terminal device is in the connected mode, if the terminal device works on the initial BWP with the first bandwidth size when receiving the system information, and if the terminal device supports the second bandwidth, the terminal device adjusts the bandwidth size of the initial BWP from the first bandwidth size to a second bandwidth size. Specifically, the terminal device adjusts a radio frequency of a transceiver from the second bandwidth size to the first bandwidth size. It should be noted that, that the terminal device is in the connected mode may be that the terminal device is handed over to a new cell, or may be at another moment. This is not limited herein.

For another example, when the terminal device is in an idle mode or an inactive mode, the terminal device determines that the bandwidth size of the initial BWP is the first bandwidth size.

However, when the terminal device is in the idle mode or the inactive mode, and the bandwidth size of the initial BWP of the terminal device is the first bandwidth size, after the terminal device determines that the bandwidth size of the initial BWP is the first bandwidth size, and further, if a mode of the terminal device changes or is in another possible case, the terminal device determines that the bandwidth size of the initial BWP is the second bandwidth size. In other words, after determining that the bandwidth size of the initial BWP is the first bandwidth size, the terminal device may further adjust the bandwidth size of the initial BWP from the first bandwidth size to the second bandwidth size based on the change of the mode of the terminal device or another possible factor or condition.

For example, after determining that the bandwidth size of the initial BWP is the first bandwidth size, when the terminal device enters the connected mode from the idle mode or the inactive mode, the terminal device determines that the bandwidth size of the initial BWP is the second bandwidth size. For example, when the terminal device has a service (answering a call, making a call, or the like) requirement, the terminal device may enter the connected mode from the idle mode or the inactive mode.

Because capabilities of some terminal devices are limited, the terminal devices cannot support the initial BWP with the first bandwidth size. After the terminal devices enter the connected mode, the terminal devices can still use only the initial BWP with the first bandwidth size. Before the network device obtains capability information of the terminal devices, if it is considered that the size of the initial BWP of the terminal device is the second bandwidth, consequently, the terminal device cannot receive data sent by the network device. Therefore, the network device needs to determine, after receiving the capability information of the terminal device, the size of the initial BWP of the terminal device, and notify the terminal device of the size of the initial BWP. It should be noted that the network device may obtain the capability information of the terminal device from a core network device, or may obtain the capability information of the terminal device from another network device, or may obtain the capability information of the terminal device from the terminal device. This is not limited herein. It should be further noted that after obtaining the capability information of the terminal device, the network device needs to notify the terminal device, so that the terminal device knows that the network device already knows the capability information of the terminal device, and the terminal device may perform, based on whether the terminal device supports the second bandwidth, reselection to determine the bandwidth of the initial BWP.

Optionally, the network device sends first control information to the terminal device, and the terminal device performs reselection to determine that the bandwidth size of the initial BWP of the terminal device is the second bandwidth size. Optionally, the terminal device may determine, based on the first control information, that the bandwidth size of the initial BWP of the terminal device is the second bandwidth size. The first control information is used to notify the terminal device that the network device already knows the capability information of the terminal device. The first control information may be in a plurality of forms. This is not limited herein.

For example, the first control information sent by the network device to the terminal device may be the first RRC reconfiguration message after initial access of the terminal device. For the terminal device in the idle mode or the inactive mode, in a random access process, the network device requests the capability information of the terminal device from the core network device or another network device. If the request succeeds, when the terminal device completes the initial access, the network device already knows the capability information of the terminal device. However, if the request fails, the network device needs to request the capability information from the terminal device after the terminal device completes the initial access. In the two cases, after obtaining the capability information of the terminal device, the network device sends an RRC reconfiguration message to the terminal device.

For example, the first control information sent by the network device to the terminal device may be an RRC resume message or a contention resolution message, and the terminal device is in the inactive mode. For the terminal device in the inactive mode, in the random access process, the network device requests the capability information of the terminal device from another network device. When the terminal device receives the RRC resume message or the contention resolution message, it indicates that the network device has obtained the capability information of the terminal device.

It should be noted that, when the first control information is the first RRC reconfiguration message after the initial access of the terminal device, the RRC resume message, or the contention resolution message, that the terminal device performs, based on whether the terminal device supports the second bandwidth, reselection to determine or determines whether to switch the bandwidth of the initial BWP includes: If the terminal device supports the second bandwidth, the terminal device determines that the bandwidth of the initial BWP is the second bandwidth, and adjusts the bandwidth of the initial BWP from the first bandwidth to the second bandwidth; and if the terminal device does not support the second bandwidth, the terminal device does not need to adjust the bandwidth of the initial BWP, that is, maintains the bandwidth size of the initial BWP as the first bandwidth.

For another example, the first control information sent by the network device to the terminal device may include first indication information, where the first indication information is used to indicate whether the terminal device adjusts the bandwidth size of the initial BWP. The terminal device performs, based on the first indication information, reselection to determine the bandwidth size of the initial BWP. Specifically, the indication information may be 1 bit, and indicates that the bandwidth of the initial BWP is the first bandwidth or the second bandwidth. Optionally, 0 may represent the first bandwidth, and 1 represents the second bandwidth, or 0 may represent the second bandwidth, and 1 represents the first bandwidth. This is not limited herein. In addition, the indication information may alternatively be indicated by whether some information elements exist, or may be defined by using special values of some information elements. This is not limited herein. It should be noted that, in this case, the first control information may be any dedicated RRC message, for example, a security command message or an RRC reconfiguration message. This is not limited herein.

Further, optionally, the network device may send second control information to the terminal device. If the second control information includes a configuration of a dedicated BWP, the terminal device does not adjust the bandwidth of the initial BWP, that is, maintains the bandwidth of the initial BWP as the first bandwidth. In this case, the terminal device in the connected mode works on the dedicated BWP instead of the initial BWP. In this case, the bandwidth of the initial BWP is maintained as the first bandwidth, and this helps the terminal device work on a more power-saving bandwidth when there is no service. If the second control information does not include the configuration of the dedicated BWP, the terminal device may determine, based on the received first control information, whether to adjust the bandwidth of the initial BWP. It should be noted that the first control information and the second control information may be carried in a same message, or may be carried in different messages. This is not limited herein. Optionally, the second control information may be any dedicated RRC message, for example, the security command message or the RRC reconfiguration message. This is not limited herein.

In the foregoing embodiments provided in this application, the communication method provided in the embodiments of this application is described from a perspective in which the terminal device and the network device are used as execution bodies. To implement functions in the foregoing communication methods provided in the embodiments of this application, the terminal device and the network device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint of the technical solutions.

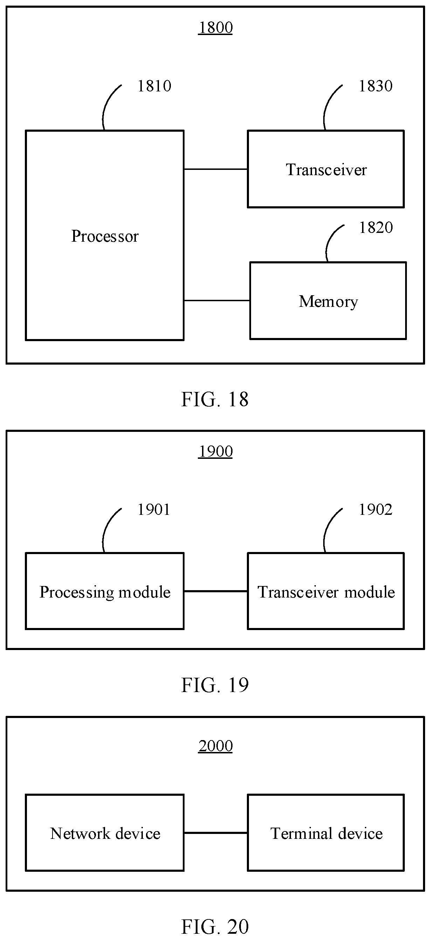

Based on a same concept, FIG. 18 shows an apparatus 1800 provided in this application. For example, the apparatus 1800 includes at least one processor 1810, a memory 1820, and a transceiver 1830. The processor 1810 is coupled to the memory 1820 and the transceiver 1830. Coupling in this embodiment of this application is indirect coupling or communication connection between apparatuses, units, or modules, may be implemented in electrical, mechanical, or other forms, and are used for information exchange between the apparatuses, the units, or the modules.

The transceiver 1830 is configured to receive or send data. The transceiver 1830 may include a receiver and a transmitter. The receiver is configured to receive the data, and the transmitter is configured to send the data. The memory 1820 is configured to store a program instruction. The processor 1810 is configured to invoke the program instruction stored in the memory 1820, to implement the communication method shown in FIG. 16 in the embodiments of this application.

The processor 1810 may be a general-purpose central processing unit (Central Processing Unit, CPU), a microprocessor, an application-specific integrated circuit (Application-Specific Integrated Circuit, ASIC), or one or more integrated circuits, and is configured to perform a related operation, to implement technical solutions provided in the embodiments of this application.

It should be noted that when the apparatus 1800 is a terminal device, the processor 1810 invokes the program instruction stored in the memory 1820, to implement the steps performed by the terminal device in the communication method shown in FIG. 16 in the embodiments of this application. When the apparatus 1800 is a network device, the processor 1810 invokes the program instruction stored in the memory 1820, to implement the steps performed by the network device in the communication method shown in FIG. 16 in the embodiments of this application.

It should be noted that although only the processor 1810, the transceiver 1830, and the memory 1820 are shown in the apparatus 1800 shown in FIG. 18, in a specific implementation process, a person skilled in the art should understand that the 1800 further includes another component required for implementing normal running. In addition, based on a specific requirement, a person skilled in the art should understand that the apparatus 1800 may further include a hardware component implementing another additional function. In addition, a person skilled in the art should understand that the apparatus 1800 may also include only components or modules necessary for implementing this embodiment of this application, and does not need to include all components shown in FIG. 18.

Based on a same concept, FIG. 19 shows an apparatus 1900 provided in this embodiment of this application. The apparatus 1900 includes a processing module 1901 and a transceiver module 1902. The transceiver module 1902 is configured to receive or send data, and may be implemented by using a transceiver. Specifically, the transceiver module 1902 is a module having a receiving and sending function, and may include a receiving module and a sending module, where the receiving module is configured to receive the data, and the sending module is configured to send the data. If the apparatus 1900 is a terminal device, the processing module 1901 is configured to perform the steps performed by the terminal device in the communication method shown in FIG. 16. If the apparatus 1900 is a network device, the processing module 1901 is configured to perform the steps performed by the network device in the communication method shown in FIG. 16.

As shown in FIG. 20, an embodiment of this application further provides a communications system 2000, including the terminal device in the embodiments of this application and the network device in the embodiments of this application.

A person of ordinary skill in the art may understand that all or some of the foregoing embodiments may be implemented through software, hardware, firmware, or any combination thereof. When the software is used for implementation, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD), a semiconductor medium (for example, a solid-state drive (Solid State Disk, SSD)), or the like.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices (for example, a terminal device). Some or all of the units may be selected based on actual requirements to achieve the objectives of the solutions of the embodiments.

In addition, functional units in the embodiments of this application may be integrated into one processing unit, or each of the functional units may exist alone, or two or more units are integrated into one unit. The integrated unit may be implemented in a form of hardware, or may be implemented in a form of hardware combined with a software functional unit.

Based on the foregoing descriptions of the implementation, a person skilled in the art may clearly understand that this application may be implemented by software in addition to necessary universal hardware or by hardware only. In most cases, the former is a better implementation. Based on such an understanding, the technical solutions of this application essentially or the part contributing to the prior art may be implemented in a form of a software product. The software product is stored in a readable storage medium, such as a floppy disk, a hard disk, or an optical disc of a computer, and includes several instructions for instructing a computer device (which may be a personal computer, a server, or a network device) to perform the methods described in the embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving tracking area information from an access network device, wherein the tracking area information comprises a first tracking area identity and a second tracking area identity, the first tracking area identity is a tracking area identity of a first cell in which a terminal device is located, and the second tracking area identity is used by the terminal device to perform a tracking area update TAU; and
determining, based on the second tracking area identity, whether to perform the TAU.

2. The communication method according to claim 1, wherein the tracking area information further comprises a time parameter; and
the determining, based on the second tracking area identity, whether to perform the TAU comprises:
determining, based on the time parameter and the second tracking area identity, whether to perform the TAU.

3. The communication method according to claim 2, wherein the time parameter is used to configure a timer, and timing duration of the timer is T; and
the determining, based on the time parameter and the second tracking area identity, whether to perform the TAU comprises:
when the timer expires, determining, based on the second tracking area identity, whether to perform the TAU.

4. The communication method according to claim 3, wherein a start moment of the timer is a first moment, and the first moment is a moment at which the terminal device camps on the first cell or is handed over to the first cell, a moment at which the terminal device enters an inactive mode, or a moment at which the terminal device performs the TAU.

5. The communication method according to claim 3 or 4, wherein the second tracking area identity is different from the first tracking area identity.

6. The communication method according to any one of claims 3 to 5, wherein the determining, based on the second tracking area identity, whether to perform the TAU comprises:
when the timer expires, determining whether a tracking area in which the terminal device is currently located is a second tracking area, wherein the second tracking area is a tracking area corresponding to the second tracking area identity; and
if the tracking area in which the terminal device is currently located is the second tracking area, skipping performing the TAU; and/or
if the tracking area in which the terminal device is currently located is not the second tracking area, performing the TAU.

7. The communication method according to any one of claims 1 to 6, wherein the method further comprises:
receiving a paging message sent by the access network device.

8. The communication method according to any one of claims 1 to 7, wherein the receiving tracking area information from an access network device comprises:
receiving a system message broadcast by the access network device, wherein the system message carries the tracking area information.

9. A communication method, comprising:
sending tracking area information to a terminal device, wherein the tracking area information comprises a first tracking area identity and a second tracking area identity, the first tracking area identity is a tracking area identity of a first cell in which the terminal device is located, and the second tracking identity is used by the terminal device to perform a tracking area update TAU.

10. The communication method according to claim 9, wherein the method further comprises:
determining the first tracking area identity and the second tracking area identity.

11. The communication method according to claim 10, wherein the determining the first tracking area identity and the second tracking area identity comprises:
receiving the first tracking area identity and the second tracking area identity from a core network device; or
preconfiguring the first tracking area identity and the second tracking area identity in an access network device.

12. The communication method according to any one of claims 9 to 11, wherein the tracking area information further comprises a time parameter, the time parameter is used to configure a timer of the terminal device, and timing duration of the timer is T.

13. The communication method according to claim 12, wherein a start moment of the timer is a first moment, and the first moment is a moment at which the terminal device camps on the first cell or is handed over to the first cell, a moment at which the terminal device enters an inactive mode, or a moment at which the terminal device performs the TAU.

14. The communication method according to claim 12 or 13, wherein the second tracking area identity is different from the first tracking area identity.

15. The communication method according to any one of claims 9 to 14, wherein the method further comprises:
receiving a paging message from the core network device; and
broadcasting the paging message.

16. The communication method according to any one of claims 9 to 15, wherein the sending tracking area information to a terminal device comprises:
broadcasting a system message, wherein the system message carries the tracking area information.

17. A communication method, comprising:
receiving, by a core network device, service data corresponding to a terminal device at a second moment; and
sending, by the core network device, a paging message in a third tracking area TA, wherein a time interval between the second moment and a third moment is greater than first duration; or
sending, by the core network device, a paging message in a fourth TA and/or at least one fifth TA, wherein a time interval between the second moment and a third moment is less than or equal to first duration, wherein
the third moment is a moment, before the second moment, at which the core network device determines a latest TA in which the terminal device is located, a moment at which the terminal device performs registration by using the core network device, or a moment at which the terminal device performs a latest tracking area update TAU.

18. The communication method according to claim 17, wherein the third TA is a TA in which the terminal device is located at the second moment, the fourth TA is a TA in which the terminal device is located at the third moment, and each fifth TA is a TA that the terminal device is expected to arrive from the third moment and at intervals of the first duration.

19. The communication method according to claim 17 or 18, wherein the method further comprises:
if the core network device fails to page the terminal device, sending, by the core network device, the paging message in one or more TAs adjacent to the fourth TA and/or one or more TAs adjacent to each fifth TA in the at least one fifth TA.

20. A communications apparatus, comprising a processor and a memory, wherein
the memory is configured to store a computer-executable instruction, and when the communications apparatus runs, the processor executes the computer-executable instruction stored in the memory, so that the communications apparatus performs the communication method according to any one of claims 1 to 8; or the communications apparatus performs the communication method according to any one of claims 9 to 16; or the communications apparatus performs the communication method according to any one of claim 17 to 19.

21. A communications apparatus, comprising:
a receiving module, configured to receive tracking area information from an access network device, wherein the tracking area information comprises a first tracking area identity and a second tracking area identity, the first tracking area identity is a tracking area identity of a first cell in which a terminal device is located, and the second tracking area identity is used by the terminal device to perform a tracking area update TAU; and
a processing module, configured to determine, based on the second tracking area identity, whether to perform the TAU.

22. A communications apparatus, comprising:
a sending module, configured to send tracking area information to a terminal device, wherein the tracking area information comprises a first tracking area identity and a second tracking area identity, the first tracking area identity is a tracking area identity of a first cell in which the terminal device is located, and the second tracking identity is used by the terminal device to perform a tracking area update TAU.

23. A communications apparatus, comprising:
a receiving module, configured to receive service data corresponding to a terminal device at a second moment; and
a sending module, configured to send a paging message in a third tracking area TA, wherein a time interval between the second moment and a third moment is greater than first duration; or configured to send a paging message in a fourth TA and/or at least one fifth TA, wherein a time interval between the second moment and a third moment is less than or equal to first duration, wherein
the third moment is a moment, before the second moment, at which a core network device determines a latest TA in which the terminal device is located, a moment at which the terminal device performs registration by using the core network device, or a moment at which the terminal device performs a latest tracking area update TAU.

24. A readable storage medium, comprising a program or an instruction, wherein when the program or the instruction is executed, the communication method according to any one of claims 1 to 8 is implemented, or the communication method according to any one of claims 9 to 16 is implemented, or the communication method according to any one of claims 17 to 19 is implemented.
